# EUROPEAN PATENT APPLICATION

(11) **EP 4 167 566 A1**
(43) Date of publication of application: **19.04.2023**
(21) Application number: 21837758.8
(22) Date of filing: 07.07.2021
(51) Int. Cl.: H04N 5/94

(54) **SCREEN RECORDING METHOD AND SCREEN RECORDING SYSTEM**

(30) Priority: 10.07.2020 CN 202010664772
(71) Applicant: Huawei Technologies Co., Ltd., Longgang District, Shenzhen, Guangdong 518129 (CN)
(72) Inventor: BAI, Yuchen, Shenzhen, Guangdong 518129 (CN); WANG, Dongxu, Shenzhen, Guangdong 518129 (CN)
(74) Representative: MERH-IP Matias Erny Reichl Hoffmann Patentanwälte PartG mbB
(86) International application number: PCT/CN2021/105033
(87) International publication number: WO 2022/007854

(57) **Abstract**

This application discloses a screen recording method, applied to a system including a first electronic device and a second electronic device. The first electronic device establishes a communication connection to the second electronic device, and the second electronic device provides target display content for the first electronic device, so that the target display content is displayed on a screen of the first electronic device. The method includes: The first electronic device receives a screen recording instruction, where the screen recording instruction is used to instruct the first electronic device to record the target display content displayed on the screen of the first electronic device. The first electronic device sends a screen recording request for performing screen recording on the target display content to the second electronic device based on the screen recording instruction. The second electronic device receives the screen recording request, generates, based on the target display content, a screen recording response corresponding to the screen recording request, and sends the screen recording response to the first electronic device. The first electronic device receives the screen recording response, and performs screen recording on the target display content based on the screen recording response, to avoid leakage of sensitive information in the target display content. This application further discloses a screen recording system.

## Description

This application claims priority to Chinese Patent Application No. 202010664772.0, filed with the China National Intellectual Property Administration on July 10, 2020 and entitled "SCREEN RECORDING METHOD AND SCREEN RECORDING SYSTEM", which is incorporated herein by reference in its entirety.

### TECHNICAL FIELD

This application relates to the field of computer technologies, and in particular, to a screen recording method and a screen recording system.

### BACKGROUND

Development of electronic devices brings increasingly powerful functions. Currently, a growing number of electronic devices, such as mobile phones and televisions, support functions such as video calling, video live broadcast, video conferencing, and screen sharing. In use scenarios of these functions, one electronic device may send display content such as camera image information (a video image of a user) or interface sharing information (screen content) of the electronic device to another electronic device for display. If the another electronic device performs screen recording (screen recording) as a recorder (screen recording end), display content sent by the electronic device that serves as a screen-recorded party (screen-recorded end) may be obtained through screen recording.

Currently, the recorder directly determines whether to perform screen recording. If the recorder determines to perform screen recording, and the display content includes some sensitive information (for example, a user portrait) of the screen-recorded party, the recorder easily obtains the sensitive information, which may cause leakage of the sensitive information of the screen-recorded party. In addition, the screen-recorded party does not know that the recorder performs screen recording, which undermines screen recording security.

### SUMMARY

This application provides a screen recording method. In a screen recording process, a party on which screen recording is performed, as a recorded party, may determine whether to allow a recorder to perform screen recording, manage a screen recording process of the recorder, and the like, to improve screen recording security and user experience.

To resolve the foregoing technical problem, according to a first aspect, an implementation of this application provides a screen recording method, applied to a system including a first electronic device and a second electronic device, where the first electronic device establishes a communication connection to the second electronic device, and the second electronic device provides target display content for the first electronic device, so that the target display content is displayed on a screen of the first electronic device. The method includes: The first electronic device receives a screen recording instruction, where the screen recording instruction is used to instruct the first electronic device to record the target display content displayed on the screen of the first electronic device. The first electronic device sends a screen recording request for performing screen recording on the target display content to the second electronic device based on the screen recording instruction. The second electronic device receives the screen recording request, generates, based on the target display content, a screen recording response corresponding to the screen recording request, and sends the screen recording response to the first electronic device. The first electronic device receives the screen recording response, and performs screen recording on the target display content based on the screen recording response.

According to the screen recording method provided in this application, when the first electronic device performs screen recording on the target display content, the first electronic device sends the screen recording request to the second electronic device. After receiving the screen recording request, the second electronic device may determine, based on the target display content, whether to allow the first electronic device to perform screen recording on the target display content. If the second electronic device does not allow the first electronic device to perform screen recording on the target display content, the recorder cannot perform screen recording to obtain the target display content sent by the second electronic device. If the second electronic device allows the first electronic device to perform screen recording on the target display content, the recorder may perform screen recording to obtain the target display content sent by the second electronic device. In addition, the second electronic device may manage the screen recording process of the first electronic device, for example, stop or start the screen recording process. This can prevent the first electronic device from obtaining sensitive information of the second electronic device, thereby avoiding leakage of the sensitive information of the second electronic device, and improving screen recording security.

In a possible implementation of the first aspect, the second electronic device generates the screen recording response in at least one of the following manners: The second electronic device generates the screen recording response based on preset default screen recording permission information of the target display content. Alternatively, the second electronic device performs sensitive information analysis on the target display content sent by the second electronic device to the first electronic device for display, to obtain a sensitivity analysis result, and the second electronic device generates the screen recording response based on the sensitivity analysis result. Alternatively, the second electronic device receives, by using a screen recording instruction input control of the second electronic device, a screen recording instruction of a user for the target display content, and generates the screen recording response based on the screen recording instruction.

According to the screen recording method provided in this implementation, after receiving the screen recording request, the second electronic device determines, by determining whether the first electronic device is always allowed to perform screen recording on the target display content, and determining, through an image recognition algorithm, whether the target display content includes sensitive information, and by using a manual selection of the user, whether the first electronic device is allowed to perform screen recording on the target display content, and the second electronic device sends a screen recording response to the first electronic device, so that the first electronic device determines, based on the screen recording response, whether to perform screen recording on the target display content. In this way, the second electronic device, as the recorded party, can interfere with screen recording performed by the first electronic device on the target display content, thereby improving screen recording security.

In a possible implementation of the first aspect, the default screen recording permission information includes screen recording information indicating that the second electronic device always allows the first electronic device to perform screen recording on the target display content, or screen recording information indicating that the second electronic device does not always allow the first electronic device to perform screen recording on the target display content.

In a possible implementation of the first aspect, the second electronic device includes a default screen recording permission setting control, and the method further includes: The second electronic device determines the default screen recording permission information based on a trigger operation performed by the user on the default screen recording permission setting control.

In a possible implementation of the first aspect, the sensitive information includes at least one piece of the following information: sensitive indication information of a source application of the target display content, sensitive text information in the target display content, or sensitive image information in the target display content.

In a possible implementation of the first aspect, the method further includes: The second electronic device generates sensitive prompt information based on the sensitivity analysis result, and displays the sensitive prompt information on a display interface of the second electronic device.

In a possible implementation of the first aspect, the second electronic device includes a screen recording instruction input management control, and the method further includes: If the second electronic device detects an enabling operation performed by the user on the screen recording instruction input management control, the second electronic device displays the screen recording instruction input control when a display condition is met. If the second electronic device detects a disabling operation performed by the user on the screen recording instruction input management control, the second electronic device does not display the screen recording instruction input control.

In a possible implementation of the first aspect, the method includes: If the second electronic device determines, based on the default screen recording permission information, that the first electronic device is always allowed to perform screen recording on the target display content, the second electronic device generates a screen recording response for allowing the first electronic device to perform screen recording on the target display content. If the second electronic device determines, based on the default screen recording permission information, that the first electronic device is not always allowed to perform screen recording on the target display content, and the sensitivity analysis result is that the sensitivity is greater than or equal to a preset sensitivity threshold, the second electronic device generates a screen recording response indicating that the first electronic device is not allowed to perform screen recording on the target display content. If the second electronic device determines, based on the default screen recording permission information, that the first electronic device is not always allowed to perform screen recording on the target display content, and the sensitivity analysis result is that the sensitivity is less than the preset sensitivity threshold, the second electronic device displays the screen recording instruction input control, and generates, based on a screen recording instruction of the user determined by using the screen recording instruction input control, a screen recording response that the first electronic device is allowed to perform screen recording on the target display content, or a screen recording response that the first electronic device is not allowed to perform screen recording on the target display content.

In a possible implementation of the first aspect, the screen recording instruction input control includes at least one of the following: a control used by the user to select to allow the first electronic device to perform screen recording on the target display content, a control used by the user to select to not allow the first electronic device to perform screen recording on the target display content, a control used by the user to select a range in which the first electronic device is allowed to perform screen recording on the target display content, and a control used by the user to select a range in which the first electronic device is not allowed to perform screen recording on the target display content.

In a possible implementation of the first aspect, a screen recording range includes a screen recording region range and/or a screen recording time range.

In a possible implementation of the first aspect, the method further includes: The second electronic device generates, based on the screen recording response, first screen recording response prompt information, and displays the first screen recording response prompt information on the display interface of the second electronic device.

In a possible implementation of the first aspect, that the first electronic device performs screen recording on the target display content based on the screen recording response includes: If the screen recording response is that the first electronic device is not allowed to perform screen recording on the target display content, the first electronic device performs sensitive information leakage prevention processing on the target display content and performs screen recording, to obtain a screen recording result, so as to avoid leakage of sensitive information. If the screen recording response is that the first electronic device is allowed to perform screen recording on the target display content, the first electronic device directly performs screen recording on the target display content, to obtain a screen recording result.

In a possible implementation of the first aspect, the method further includes: The first electronic device generates, based on the screen recording response, second screen recording response prompt information, and displays the second screen recording response prompt information on a display interface of the first electronic device.

In a possible implementation of the first aspect, the target display content includes video image information that is collected by a camera of the second electronic device and that is sent by the second electronic device, and/or interface sharing information that is of the second electronic device and that is sent by the second electronic device.

According to a second aspect, an implementation of this application provides a screen recording method, used by a first electronic device. The first electronic device establishes a communication connection to a second electronic device, and a screen of the first electronic device displays target display content provided by the second electronic device for the first electronic device. The method includes: The first electronic device receives a screen recording instruction, where the screen recording instruction is used to instruct the first electronic device to record the target display content displayed on the screen of the first electronic device. The first electronic device sends a screen recording request for performing screen recording on the target display content to the second electronic device based on the screen recording instruction. The first electronic device receives a screen recording response sent by the second electronic device, where the screen recording response is corresponding to the screen recording request and is generated by the second electronic device based on the target display content; and performs screen recording on the target display content based on the screen recording response.

In a possible implementation of the second aspect, that the first electronic device performs screen recording on the target display content based on the screen recording response includes: If the screen recording response is that the first electronic device is not allowed to perform screen recording on the target display content, the first electronic device performs sensitive information leakage prevention processing on the target display content and performs screen recording, to obtain a screen recording result, so as to avoid leakage of sensitive information. If the screen recording response is that the first electronic device is allowed to perform screen recording on the target display content, the first electronic device directly performs screen recording on the target display content, to obtain a screen recording result.

In a possible implementation of the second aspect, the method further includes: The first electronic device generates, based on the screen recording response, second screen recording response prompt information, and displays the second screen recording response prompt information on a display interface of the first electronic device.

The screen recording method provided in this application is a screen recording method on a first electronic device side corresponding to the screen recording method provided in the first aspect and/or any one of the possible implementations of the first aspect. Therefore, beneficial effects (or advantages) of the screen recording method provided in the first aspect can also be implemented.

According to a third aspect, an implementation of this application provides a screen recording method, used by a second electronic device. The second electronic device establishes a communication connection to a first electronic device, and the second electronic device provides target display content for the first electronic device, so that the target display content is displayed on a screen of the first electronic device. The method includes: The second electronic device receives a screen recording request sent by the first electronic device, where the screen recording request is used by the first electronic device to request to perform screen recording on the target display content displayed on the screen of the first electronic device. The second electronic device generates, based on the target display content, a screen recording response corresponding to the screen recording request, and sends the screen recording response to the first electronic device, so that the first electronic device performs screen recording on the target display content based on the screen recording response.

In a possible implementation of the third aspect, the second electronic device generates the screen recording response in at least one of the following manners: The second electronic device generates the screen recording response based on preset default screen recording permission information of the target display content. Alternatively, the second electronic device performs sensitive information analysis on the target display content sent by the second electronic device to the first electronic device for display, to obtain a sensitivity analysis result, and the second electronic device generates the screen recording response based on the sensitivity analysis result. Alternatively, the second electronic device receives, by using a screen recording instruction input control of the second electronic device, a screen recording instruction of a user for the target display content, and generates the screen recording response based on the screen recording instruction.

The screen recording method provided in this application is a screen recording method on a second electronic device side corresponding to the screen recording method provided in the first aspect and/or any one of the possible implementations of the first aspect. Therefore, beneficial effects (or advantages) of the screen recording method provided in the first aspect can also be implemented.

According to a fourth aspect, an implementation of this application provides a screen recording system, including at least a first electronic device and a second electronic device. The first electronic device establishes a communication connection to the second electronic device, and the second electronic device provides target display content for the first electronic device, so that the target display content is displayed on a screen of the first electronic device. The first electronic device is configured to receive a screen recording instruction, and the screen recording instruction is used to instruct the first electronic device to record the target display content displayed on the screen of the first electronic device. The first electronic device is configured to send a screen recording request for performing screen recording on the target display content to the second electronic device based on the screen recording instruction. The second electronic device is configured to receive the screen recording request, generate, based on the target display content, a screen recording response corresponding to the screen recording request, and send the screen recording response to the first electronic device. The first electronic device is configured to receive the screen recording response, and perform screen recording on the target display content based on the screen recording response.

The screen recording system provided in this application includes the first electronic device and the second electronic device that are configured to perform the screen recording method provided in the first aspect and/or any one of the possible implementations of the first aspect. Therefore, beneficial effects (or advantages) of the screen recording method provided in the first aspect can also be implemented.

According to a fifth aspect, an implementation of this application provides an electronic device, including: a memory, configured to store a computer program, where the computer program includes program instructions; a control component, configured to execute the program instructions, so that the electronic device performs the screen recording method provided in the first aspect and/or any one of the possible implementations of the first aspect, or the electronic device performs the screen recording method provided in the second aspect and/or any one of the possible implementations of the second aspect, or the electronic device performs the screen recording method provided in the third aspect and/or any one of the possible implementations of the third aspect.

According to a sixth aspect, an implementation of this application provides a computer-readable storage medium, where the computer-readable storage medium stores a computer program, the computer program includes program instructions, and the program instructions are run by a computer to enable the computer to perform the screen recording method provided in the first aspect and/or any one of the possible implementations of the first aspect, or to enable the computer to perform the screen recording method provided in the second aspect and/or any one of the possible implementations of the second aspect, or to enable the computer to perform the screen recording method provided in the third aspect and/or any one of the possible implementations of the third aspect.

### BRIEF DESCRIPTION OF DRAWINGS

To describe the technical solutions in this application more clearly, the following briefly describes the accompanying drawings used for describing the implementations.
FIG. 1 shows a video call application scenario of a screen recording method provided in this application according to some implementations of this application;
FIG. 2 shows a flowchart of a screen recording method in the conventional technology according to some implementations of this application;
FIG. 3A shows a schematic diagram of a structure of a mobile phone according to some implementations of this application;
FIG. 3B shows a schematic diagram of a software structure of a mobile phone according to some implementations of this application;
FIG. 4A to FIG. 4H show schematic diagrams of display interfaces of a mobile phone 100 and a mobile phone 200 in some video call scenarios according to some implementations of this application;
FIG. 5A shows a schematic diagram of software structures of a mobile phone 100 and a mobile phone 200 provided in this application according to some implementations of this application;
FIG. 5B shows a schematic diagram of other software structures of a mobile phone 100 and a mobile phone 200 provided in this application according to some implementations of this application;
FIG. 6 shows a schematic flowchart of a screen recording method according to some implementations of this application;
FIG. 7 shows a schematic diagram of a process in which a mobile phone 100 generates a screen recording response according to some implementations of this application;
FIG. 8A shows a schematic diagram of display interfaces of a mobile phone 100 and a mobile phone 200 in a multi-party call application scenario according to some implementations of this application;
FIG. 8B shows a schematic diagram of a process in which a mobile phone 200 generates a screen recording response in a multi-party video call scenario according to some implementations of this application;
FIG. 8C shows a schematic diagram of a screen recording result obtained by a mobile phone 100 according to some implementations of this application;
FIG. 9 shows a schematic diagram of display interfaces of a mobile phone 100 and a mobile phone 200 in a video live broadcast application scenario according to some implementations of this application;
FIG. 10A to FIG. 10D show a schematic diagram of display interfaces of a mobile phone 100 and a mobile phone 200 in a video conference and screen sharing application scenario according to some implementations of this application;
FIG. 11 shows a schematic diagram of a structure of an electronic device according to some embodiments of this application; and
FIG. 12 shows a schematic diagram of a structure of a system on chip (SoC) according to some embodiments of this application.

### DESCRIPTION OF EMBODIMENTS

The following describes the implementations of embodiments of this application in detail with reference to accompanying drawings.

In a scenario of using functions such as a video call, a video live broadcast, a video conference, and screen sharing of an electronic device, in a plurality of electronic devices that establish communication connections, there is a case in which a second electronic device provides target display content for a first electronic device, so that the target display content is displayed on a screen of the first electronic device. For example, in a video call, a video live broadcast, or a video conference scenario, the second electronic device sends, to the first electronic device, a video image (a portrait of a user B) of the user B that is collected by a camera of the second electronic device, or in a screen sharing scenario, the second electronic device sends screen content of the second electronic device to the first electronic device. If the first electronic device performs screen recording, and the target display content includes sensitive information (for example, information such as the portrait of the user B), the first electronic device obtains the sensitive information of the second electronic device, causing leakage of the sensitive information of the second electronic device and undermining security of screen recording.

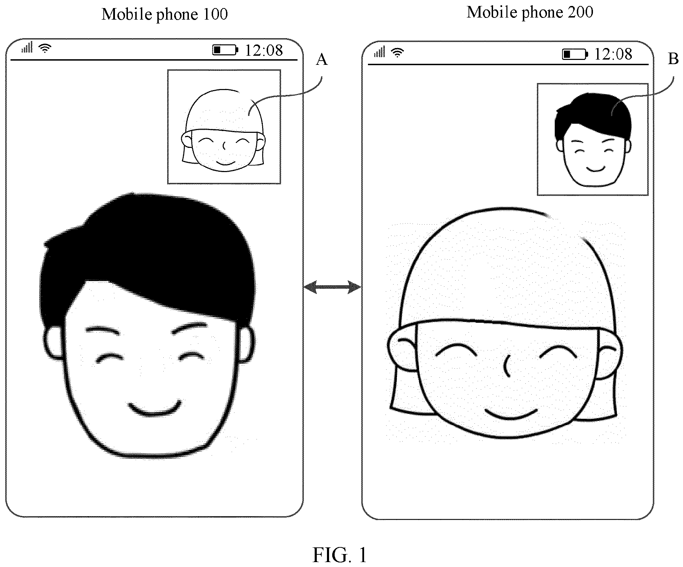

Referring to FIG. 1, this application provides a screen recording system in a video call scenario. The screen recording system includes a mobile phone 100 and a mobile phone 200. A user of the mobile phone 100 is a user A, and a user of the mobile phone 200 is a user B. The mobile phone 100 establishes a video call connection to the mobile phone 200, and the user A and the user B perform a video call by using the mobile phone 100 and the mobile phone 200. During the video call, two parties in the video call send video images (including personal portraits) of the user B that are collected by their respective cameras to each other, so that the video images are displayed on a display of the other party. For example, the mobile phone 100 sends a first video image of the user A of the mobile phone 100 to the mobile phone 200 for display, and the mobile phone 200 sends a second video image of the user B of the mobile phone 200 to the mobile phone 100 for display.

In addition, one party (for example, the mobile phone 100) in the video call may set a video image (for example, the second video image of the user B of the mobile phone 200) of the user of the other party in the video call as a main display of a call interface (currently, a video call application performs processing in this manner by default, that is, a video image of the other party is set as a main display, and a video image of the local party is set as a small window display).

Screen recording during a video call may be as follows: A mobile phone of a party in the video call serves as a recorder to initiate screen recording, and screen recording is performed on a screen of the recorder. When a current recorder performs screen recording, generally, the recorder directly determines whether to perform screen recording. If the recorder determines to perform screen recording, and a screen of the recorder displays a video image of another user (as a recorded party) that is in a video call, the recorder performs screen recording on the video image of the other user in the screen recording process, which easily causes leakage of the video image of the other user in the video call as sensitive information. For example, if the mobile phone 100 considers by default that the mobile phone 100 may directly perform screen recording on the video call interface of the local party, the mobile phone 100 may record the second video image of the user B of the mobile phone 200, and then easily steal a personal portrait of the user B.

In addition, currently, a video call function of a mobile phone is very popular, and resolution of a video image during a video call is gradually increasing (for example, increased to 1080P), and image quality is increasingly clear. The personal portrait of the user B obtained by screen recording of the mobile phone 100 is very clear. Therefore, once the personal portrait is leaked, a greater risk exists.

Currently, in consideration of a screen recording security risk of a video call, some video call software forcibly requires that a user (a mobile phone) cannot perform screen recording (a screen recording application or a screen recording function cannot be used) during a video call. However, this is not user-friendly to a user who really has a screen recording requirement, and video image information required during a video call cannot be recorded.

Simply supporting or not supporting recording the screen of the local party during a video call by a mobile phone cannot meet a screen recording requirement of a user. Therefore, specific judgment and processing need to be performed for a screen recording function in such a scenario to determine whether screen recording can be performed.

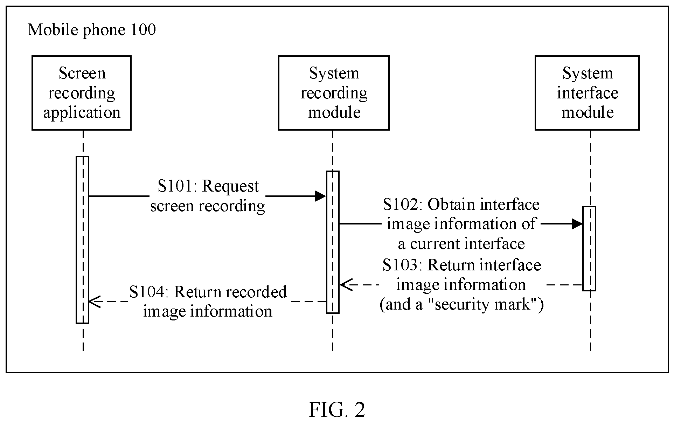

Referring to FIG. 2, a screen recording method for performing screen recording in a video call process in the conventional technology is provided. The screen recording process includes the following steps.

S101: A mobile phone 100 performs a video call with a mobile phone 200. After a screen recording application at an application layer of the mobile phone 100 receives a screen recording instruction of a user A, the screen recording application sends a screen recording request (requesting screen recording) to a system recording module at an application framework layer of the mobile phone 100, to request to obtain interface image information (including video image information of a video call in a foreground of the mobile phone 100 in this case) of a current display interface of the mobile phone 100.

S102: After receiving the screen recording request, the system recording module initiates, to a system interface module at the application framework layer, an obtaining request for obtaining the interface image information of the current display interface of the mobile phone 100.

S103: After receiving the obtaining request, the system interface module returns the interface image information of the display interface to the system recording module. If a "security mark" is set for a video call application, the interface image information includes the "security mark"; or if a "security mark" is not set for a video call application, the interface image information does not include the "security mark".

S104: After receiving the interface image information, the system recording module determines whether the interface image information of the current interface has the "security mark". If the "security mark" is set for the video call application, the interface image information is definitely not recorded or captured, that is, the system recording module clears the obtained interface image information or sets the obtained interface image information to a black screen, and then returns the information to the screen recording application as returned recorded image information. If the interface image information does not have the "security mark", the system recording module sends the obtained interface image information to the screen recording application as returned recorded image information.

It should be noted that the "security mark" may be set in a text form such as "Unsafe" or "Sensitive information included", or may be set in another manner.

After obtaining the recorded image information, the screen recording application converts the recorded image information into a preset video format, writes the recorded image information into a system memory of the mobile phone 100, and saves the recorded image information as a video file. If the interface image information is cleared or set to a black screen in this case, the stored video file is also a black screen, so that exposure of sensitive information can be avoided.

Whether the mobile phone 100 can normally record the interface image information based on the screen recording method completely depends on whether the "security mark" is set for the interface application in the foreground of the mobile phone 100. If a developer of the video call application considers that a video image in a video call is sensitive information and sets the "security mark", the video image in the video call cannot be recorded at all. Otherwise, a current video image is completely recorded, causing leakage of a personal portrait of a recorded party (a party that is screen-recorded). The video call application may be a built-in video call application of the mobile phone 100, or may be a third-party video call application.

A problem of the screen recording method is that the mobile phone 200, as the recorded party, is not in the screen recording process. As a result, the recorded party does not know that the mobile phone 100 serving as the recorder performs screen recording on the video image, and the mobile phone 200 cannot interfere with screen recording of the mobile phone 100. Consequently, the recorded party cannot well intervene in screen recording.

This application provides a screen recording method. In the screen recording method, a recorded party is added to a screen recording process, so that the recorded party can know a screen recording operation performed by a recorder on target display content (that is, display content sent by the screen-recorded party to the screen recorder for display), and the recorded party can interfere with the screen recording process performed by the recorder on the target display content. For example, in a screen recording process, when performing screen recording on the target display content, the recorder sends a screen recording request to the recorded party. After receiving the screen recording request, the recorded party may determine, based on the target display content, whether to allow the recorder to perform screen recording on the target display content. If the recorded party does not allow the recorder to perform screen recording on the target display content, the recorder cannot obtain the target display content sent by the recorded party. In addition, the recorded party may stop or start a screen recording process of the recorder. This can prevent the recorder from obtaining sensitive information of the recorded party and causing leakage of the sensitive information of the recorded party, thereby improving screen recording security.

The screen recording method provided in this application may be applied to the video call screen recording scenario shown in FIG. 1. When the mobile phone 100 serves as a recorder to start screen recording to perform screen recording on a video image, the mobile phone 100 sends, through a video call communication channel established by the video call applications of the mobile phone 100 and the mobile phone 200, a screen recording request to the mobile phone 200 serving as a recorded party. After receiving the screen recording request, the mobile phone 200 determines whether to allow the mobile phone 100 to perform screen recording on the video image, and generates a screen recording response indicating that the mobile phone 100 is allowed to perform screen recording on the video image, or generates a screen recording response indicating that the mobile phone 100 is not allowed to perform screen recording on the video image. In this way, as the recorded party, the mobile phone 200 may interfere with screen recording performed by the mobile phone 100 that serves as the recorder on a video image, and determine whether video image information of the mobile phone 200 can be recorded by the mobile phone 100, to avoid leakage of sensitive information such as a personal portrait right of the user B of the mobile phone 200. Then the mobile phone 200 sends the screen recording response to the mobile phone 100 through the video call communication channel, so that the mobile phone 100 performs screen recording on the video image based on the screen recording response.

The screen recording method provided in this application may be applied to an electronic device including but not limited to a mobile phone, a tablet computer, a television, a notebook computer, an ultra-mobile personal computer (ultra-mobile personal computer, UMPC), a handheld computer, a netbook, a personal digital assistant (personal digital assistant, PDA), a wearable device, a virtual reality device, and the like.

In this application, the electronic device is an electronic device that can perform wireless communication with another electronic device, and the electronic device has a screen, and has a screen recording function and a video call function.

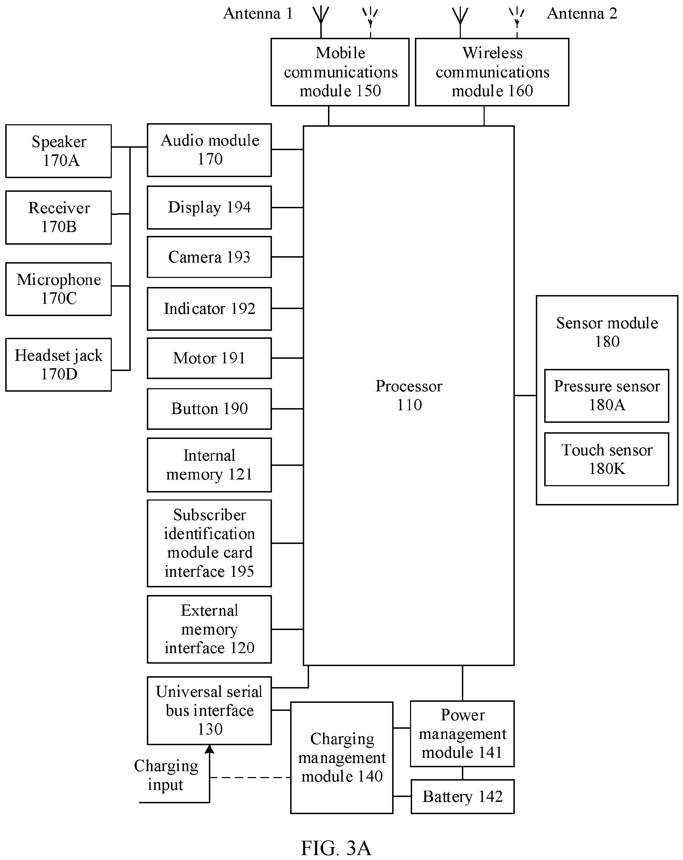

Referring to FIG. 3A, FIG. 3A shows a schematic diagram of a structure of a mobile phone used as an example of an electronic device for implementing a screen recording method in this application in an implementation of this application.

The mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a touch sensor 180K, and the like.

It may be understood that the structure shown in this embodiment of the present invention does not constitute a specific limitation on the mobile phone. In some other embodiments of this application, the mobile phone may include more or fewer components than those shown in the figure, or some components may be combined, or some components may be split, or there may be a different component layout.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), and a baseband processor. Different processing units may be independent components, or may be integrated into one or more processors.

The processor may generate an operation control signal based on an instruction operation code and a time sequence signal to control instruction fetching and instruction executing.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

A wireless communications function of the mobile phone may be implemented by using the antenna 1, the antenna 2, the mobile communications module 150, the wireless communications module 160, the modem processor, the baseband processor, and the like.

The mobile communications module 150 may provide a wireless communications function such as 2G/ 3G/ 4G/5G applied to the mobile phone 100.

The wireless communications module 160 may provide a wireless communication solution that includes a wireless local area network (wireless local area networks, WLAN) (for example, a wireless fidelity (wireless fidelity, Wi-Fi) network) and Bluetooth (Bluetooth, BT) and that is applied to the mobile phone 100.

In some embodiments, the antenna 1 of the mobile phone is coupled to the mobile communications module 150, and the antenna 2 is coupled to the wireless communications module 160, so that the mobile phone may communicate with a network and another device by using a wireless communications technology.

The application processor outputs a sound signal by using an audio device (which is not limited to the speaker 170A, the receiver 170B, or the like), or displays an image or a video by using the display 194.

The mobile phone implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the GPUs execute program instructions to generate or change display information.

The display 194 is configured to display an image, a video, and the like. In some embodiments, the mobile phone may include one or N displays 194, where N is a positive integer greater than 1.

The mobile phone may implement a photographing function and a video call function by using the ISP, the camera 193, the video codec, the GPU, the display 194, the application processor, and the like. In some embodiments, the mobile phone may include one or N cameras 193, where N is a positive integer greater than 1. Further, the mobile phone includes at least one camera 193 located on a same side as the display 194.

The video codec is configured to compress or decompress a digital video. The mobile phone may support one or more video codecs. In this way, the mobile phone may play or record videos in a plurality of encoding formats, for example, moving picture experts group (moving picture experts group, MPEG) 1, MPEG2, MPEG3 and MPEG4. In addition, the mobile phone may encapsulate and play audio/video data and screen recording data.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the mobile phone, such as image recognition, facial recognition, speech recognition, and text understanding, can be implemented by using the NPU.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data or an address book) created during use of the mobile phone, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or instructions stored in a memory disposed in the processor, to perform various function applications and data processing that are of the mobile phone.

The mobile phone may implement an audio function by using the audio module 170, the speaker 170A, the receiver 170B, the microphone 170C, the headset jack 170D, the application processor, and the like, for example, video call, music playing, and recording.

The pressure sensor 180A is configured to sense a pressure signal, and can convert the pressure signal into an electrical signal. In some embodiments, the pressure sensor 180A may be disposed in the display 194. When a touch operation is performed on the display 194, the mobile phone detects strength of the touch operation based on the pressure sensor 180A. The mobile phone may also calculate a touch position based on a detection signal of the pressure sensor 180A.

The touch sensor 180K is also referred to as a "touch component". The touch sensor 180K may be disposed in the display 194, and the touch sensor 180K and the display 194 constitute a touchscreen, which is also referred to as a "touch screen". The touch sensor 180K is configured to detect a touch operation performed on or near the touch sensor 180K. The touch sensor 180K may transfer the detected touch operation to the application processor to determine a touch event type. Visual output related to the touch operation may be provided by using the display 194. In some other embodiments, the touch sensor 180K may alternatively be disposed on a surface of the mobile phone at a position different from that of the display 194.

In this embodiment of this application, the mobile phone may detect a trigger operation performed by the user on the display 194 based on the pressure sensor 180A and the touch sensor 180K, or may detect voice input of the user based on the receiver 170B, or may detect gesture input of the user based on the camera 193, or may detect input of the user based on an input module such as another input keyboard. This is not limited in this embodiment.

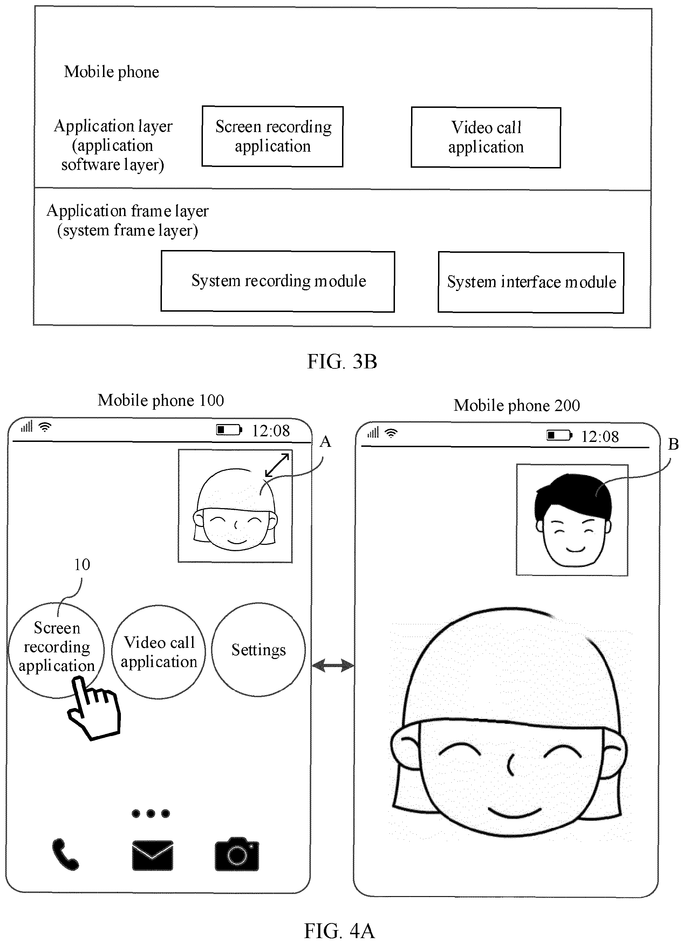

Referring to FIG. 3B, FIG. 3B shows a block diagram of a software structure of a mobile phone used as an example of an electronic device for implementing a screen recording method in this application in an implementation of this application.

In a layered architecture, software is divided into several layers, and each layer has a clear role and task. The layers communicate with each other through a software interface. In some embodiments, a system of the mobile phone may be an Android system, or may be another type of system. The Android system includes but is not limited to an application layer (application software layer) and an application framework layer (system framework layer). The application layer may include a series of application packages. The application framework layer provides an application programming interface (application programming interface, API) and a programming framework for an application at the application layer. The application framework layer includes some predefined functions.

The application package may include a screen recording application used to implement a screen recording function. The screen recording application may communicate with a system recording module that is responsible for collecting interface information and that is at the application framework layer, start recording of a system screen of the mobile phone, and store a recording result. The screen recording application is a triggering module of the screen recording function.

The application package may include a video call application used to implement a video call function. The video call application is a module that enables a user of the mobile phone to perform a remote video call with another user. Video information generated in a video call is an object that needs to be identified and protected in this application, that is, content that needs to be recorded by the screen recording application. In addition, the video call application may notify, by using a communication channel established during the video call with another electronic device that is involved in the video call, the another electronic device to determine whether to allow screen recording.

In this application, the video call function and the screen recording function may be separately implemented by independent applications. Certainly, the video call function and the screen recording function may alternatively be implemented by a same application. For example, a screen recording control is added to the video call application to implement the screen recording function. This may be set based on a requirement.

In addition, the application layer may further include applications (not shown in the figure) such as Gallery, Calendar, Phone, Maps, Navigation, WLAN, Bluetooth, Music, Videos, and Messages.

The application framework layer includes but is not limited to a system recording module and a system interface module. The system recording module is a module that is in an application framework and is responsible for connecting to the screen recording application. The system recording module is responsible for receiving a recording request sent by the screen recording application at the application layer, obtaining interface information (image information) of a current interface from the system interface module, and returning the interface information to the screen recording application at the application layer.

The system interface module is a module that is in the application framework and that is responsible for displaying an interface. For example, in a video call, the system interface module is responsible for presenting video information in the video call. When screen recording is required, the system recording module obtains interface image information of a current screen from the system interface module.

It should be noted that the system recording module may be a system screen recording application programming interface (Application Programming Interface, API) in a system, or may be considered as an API corresponding to the screen recording application. The system interface module may be an API used for screen capture in the system, that is, may be a screen capture API. Certainly, the functions of the system recording module and the system interface module may alternatively be implemented by other components/modules.

The application framework layer may further include a window manager, a content provider, a view system, a phone manager, a resource manager, a notification manager, and the like (not shown in the figure).

In addition, the Android system may further include an Android runtime (Android runtime), a system library, a kernel layer, and the like (not shown in the figure). This is not limited in this application.

This application provides a screen recording method. A screen recording process includes the following operation procedure.

In the video call scenario shown in FIG. 1, if the user A wants to perform screen recording, as shown in FIG. 4A, the user A may zoom out a video call window of the mobile phone 100, and tap a screen recording application 10 on the display interface of the mobile phone 100. The mobile phone 100 receives a screen recording instruction after detecting a trigger operation performed by the user A on the screen recording application 10. After receiving the screen recording instruction, the mobile phone 100 determines whether the mobile phone 100 is currently in a video call with the mobile phone 200. If the mobile phone 100 determines that the mobile phone 100 is currently in a video call with the mobile phone 200, the mobile phone 100 sends a screen recording request to the mobile phone 200.

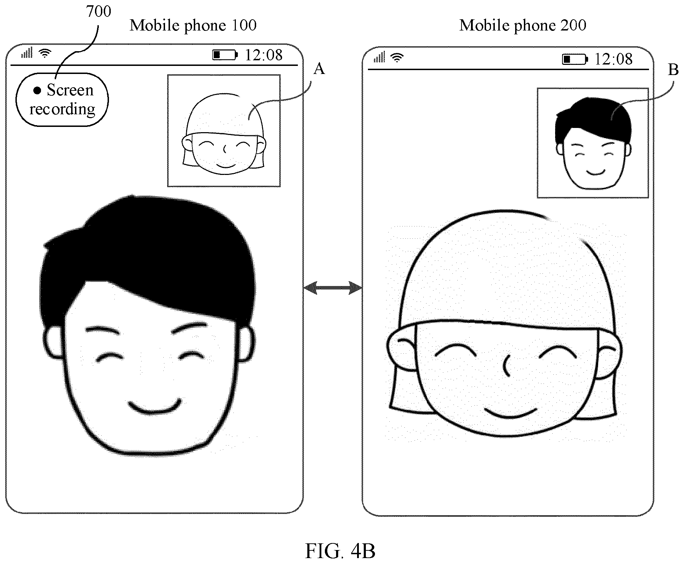

In addition, if the mobile phone 100 further detects a zoom-in operation performed by the user A on the video call window, the mobile phone 100 displays a display interface shown in FIG. 4B, and displays, on the display interface of the mobile phone 100, a prompt box 700 displaying "Screen recording", to prompt the user A that screen recording is enabled on the mobile phone 100. The screen recording application 10 may perform screen recording on a video image interface of the mobile phone 100 that displays the video call.

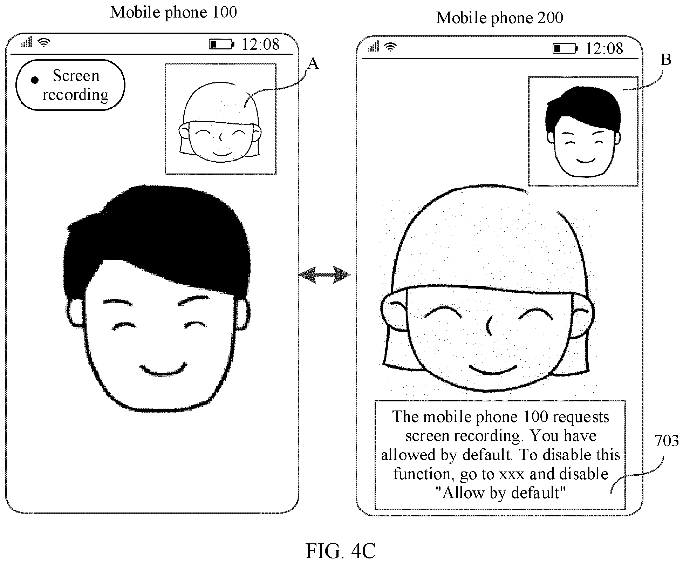

After receiving the screen recording request, the mobile phone 200 first determines whether the mobile phone 200 always allows, by default, the mobile phone 100 to perform screen recording on the second video image sent by the mobile phone 200 to the mobile phone 100 for display in a video call process. If the mobile phone 200 is preset to always allow, by default, the mobile phone 100 to perform screen recording on the second video image sent by the mobile phone 200 in a video call process, a prompt box 703 shown in FIG. 4C may be displayed on the display interface of the mobile phone 200, and the prompt box displays "The mobile phone 100 requests screen recording. You have allowed by default. To disable this function, go to xxx (for example, Screen Recording Settings) and disable Allow by default".

If the mobile phone 200 is preset to always allow, by default, the mobile phone 100 to perform screen recording on the second video image sent by the mobile phone 200 in a video call process, the mobile phone 200 sends, to the mobile phone 100, a screen recording response indicating that the mobile phone 100 is allowed to perform screen recording on the second video image.

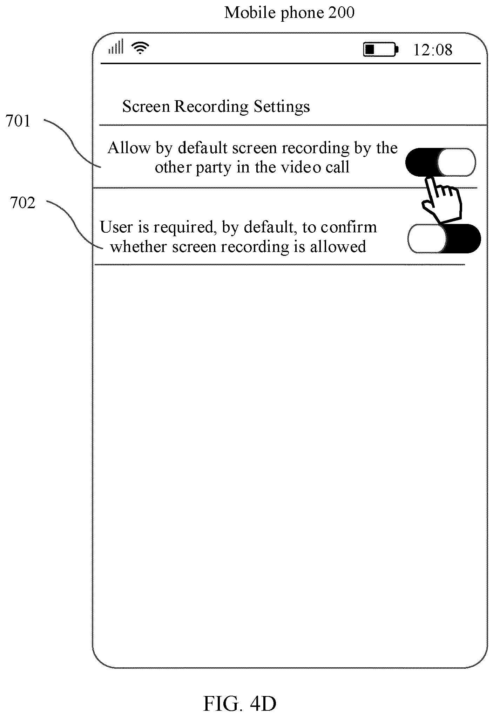

It should be noted that, setting whether the mobile phone 200 always allows the mobile phone 100 to perform screen recording on the second video image in a video call process by default may be as shown in FIG. 4D. A default screen recording permission setting control 701 (which may display "Allow by default screen recording by the other party in the video call") that is used by the user to preset whether the mobile phone 100 is allowed to perform screen recording on the second video image in a video call process is set under a screen recording setting control of the mobile phone 200. If the default screen recording permission setting control 701 is enabled, it may be considered that the mobile phone 200 is set to always allow, by default, the mobile phone 100 to perform screen recording on the second video image in a video call process. If the default screen recording permission setting control 701 is disabled, it may be considered that the mobile phone 200 is not set to always allow, by default, the mobile phone 100 to perform screen recording on the second video image in a video call process.

Whether the mobile phone 100 is always allowed to perform screen recording on the second video image in a video call process is preset, so that an unnecessary determining process can be saved, and power consumption of the mobile phone 200 can be reduced.

After the mobile phone 200 receives the screen recording request, if the mobile phone 200 determines that the mobile phone 200 is not set to always allow, by default, the mobile phone 100 to perform screen recording on the second video image in a video call process, the mobile phone 200 may identify, by using a processing method such as an image recognition algorithm, whether the second video image information currently sent to the mobile phone 100 for display includes sensitive information, and obtain a sensitive analysis result based on the sensitive information. For example, if the second video image includes the personal portrait of user B, it is considered that the second video image includes sensitive information, and the sensitivity analysis result is "sensitive".

In addition, as shown in FIG. 4D, the mobile phone 200 may be configured with a screen recording instruction input management control 702 (which may display "The user is required, by default, to confirm whether screen recording is allowed") that is used for the user to select whether the user needs to confirm again whether to allow the mobile phone 100 to perform screen recording on the second video image after the user selects image recognition processing. If the screen recording instruction input management control 702 is enabled, it may be considered that the mobile phone 200 is set to require the user to confirm whether the mobile phone 100 is allowed to perform screen recording on the second video image. In the screen recording process, the mobile phone 200 needs to display an interface used by the user to determine whether to allow the mobile phone 100 to perform screen recording on the second video image, and the mobile phone 200 needs to determine a screen recording response based on selection of the user. If the screen recording instruction input management control 701 is disabled, it may be considered that the mobile phone 200 is not set to require the user to confirm again whether to allow the mobile phone 100 to perform screen recording on the second video image. In the screen recording process, the mobile phone 200 does not need to display an interface used by the user to determine whether to allow the mobile phone 100 to perform screen recording on the second video image, and the mobile phone 200 only needs to generate a screen recording response based on a result obtained through automatic image recognition.

The mobile phone 200 may determine, by presetting the screen recording instruction input management control 702, whether the user needs to confirm again, after image recognition processing, whether to allow the mobile phone 100 to perform screen recording on the second video image. This can ensure that after the mobile phone 200 determines, through image recognition, whether the second video image is sensitive, the user B may further manually intervene in a determining process. The mobile phone 200 determines a final screen recording response based on an opinion of the user B, and finally returns the final screen recording response to the mobile phone 100, so that the user B can participate in the screen recording process, thereby improving user experience.

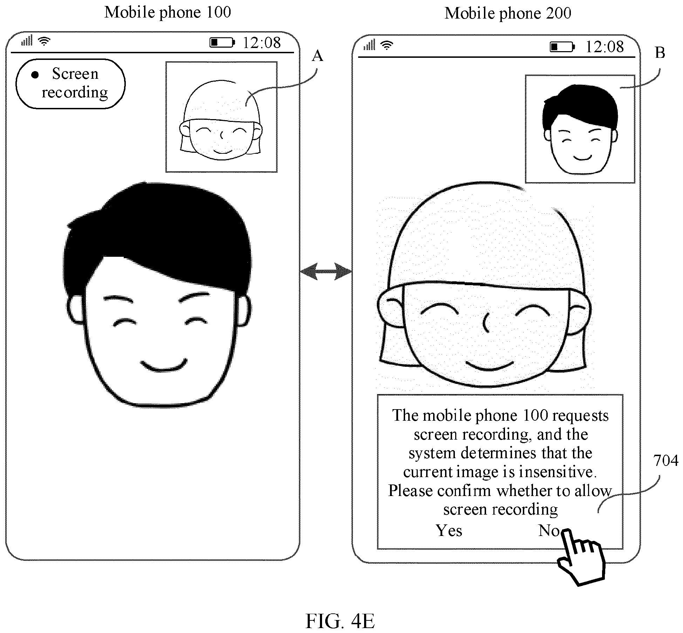

In this application, if the screen recording instruction input management control 702 is enabled, and the sensitivity analysis result is that a current image is insensitive, the mobile phone 200 may display a prompt box 704 on the display interface shown in FIG. 4E, to and the prompt box displays "The mobile phone 100 requests screen recording, and the system determines that the current image is insensitive. Please confirm whether to allow screen recording."

If the mobile phone 200 detects a trigger operation performed by the user B on a "Yes" control, the mobile phone 200 sends, to the mobile phone 100, the screen recording response indicating that the mobile phone 100 is allowed to perform screen recording on the second video image. If the mobile phone 200 detects a trigger operation performed by the user B on a "No" control, the mobile phone 200 sends, to the mobile phone 100, a screen recording response indicating that the mobile phone 100 is not allowed to perform screen recording on the second video image.

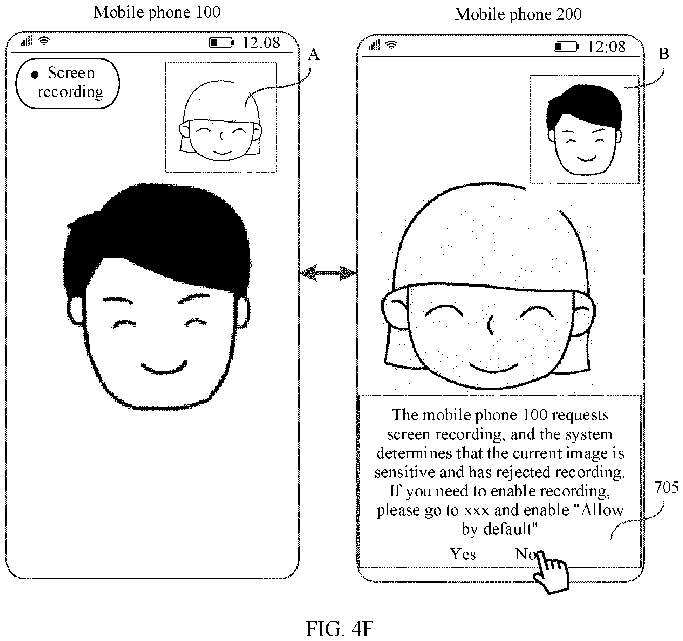

If the sensitivity analysis result is that a current image is sensitive, the mobile phone 200 sends, to the mobile phone 100, the screen recording response indicating that the mobile phone 100 is not allowed to perform screen recording on the second video image. In addition, the mobile phone 200 may further determine a screen recording risk by using an image recognition algorithm, and generate screen recording risk prompt information, to notify the user B of the screen recording risk, so that the user B determines whether to allow screen recording. For example, the mobile phone 200 may display a prompt box 705 on a display interface shown in FIG. 4F, and the prompt box 705 displays "The mobile phone 100 requests screen recording, and the system determines that the current image is sensitive and has rejected recording. If you need to enable recording, please go to xxx (for example, Screen Recording Settings) and enable "Allow by default".

If the mobile phone 200 detects a trigger operation performed by the user B on a "Yes" control, the mobile phone 200 displays a display interface shown in FIG. 4C, so that the user B chooses, by using the default screen recording permission setting control 701, whether to enable "Allow by default". If the mobile phone 200 detects an enabling trigger operation performed by the user B on the default screen recording permission setting control 701, the mobile phone 200 sends, to the mobile phone 100, the screen recording response indicating that the mobile phone 100 is allowed to perform screen recording on the second video image. If the mobile phone 200 detects a trigger operation performed by the user B on a "No" control, the mobile phone 200 sends, to the mobile phone 100, a screen recording response indicating that the mobile phone 100 is not allowed to perform screen recording on the second video image.

If the mobile phone 200 detects a trigger operation performed by the user B on the "No" control, the mobile phone 200 does not need to send, to the mobile phone 100, the screen recording response indicating that the mobile phone 100 is not allowed to perform screen recording on the second video image.

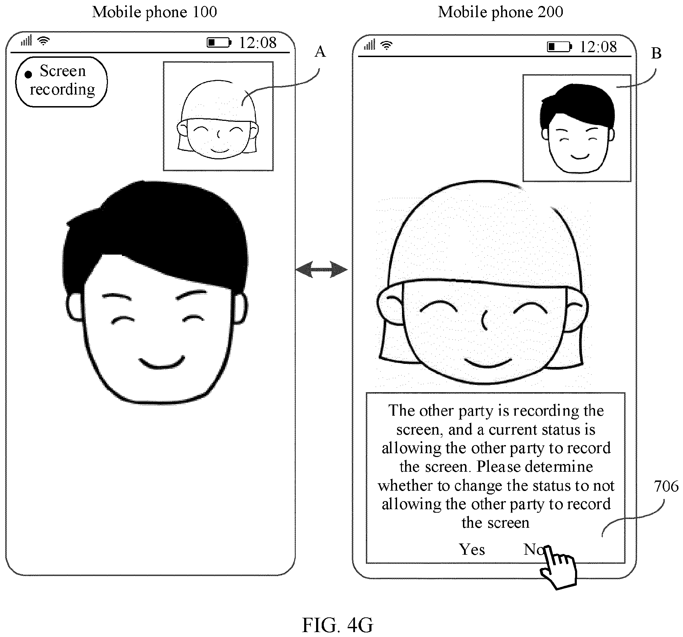

After generating the screen recording response, the mobile phone 200 may display the foregoing prompt boxes shown in FIG. 4C, FIG. 4F, and FIG. 4G as first screen recording response prompt information to remind the user B of the screen recording response of the mobile phone 200, or may display another type of a first screen recording response.

It should be noted that, in this application, after receiving the screen recording response sent by the mobile phone 200, the mobile phone 100 may display, on the display interface of the mobile phone 100, second screen recording response prompt information such as "The other party allows you to perform screen recording" or "The other party rejects you to perform screen recording".

In another implementation of this application, in a screen recording process, the mobile phone 200 may further periodically (for example, at any value such as 1 minute or 5 minutes) display a prompt box 706 on the display interface, as shown in FIG. 4G, and the prompt box displays "The other party is recording the screen, and a current status is allowing the other party to record the screen. Please determine whether to change the status to not allowing the other party to record the screen". In this way, the mobile phone 200 can manage screen recording of the second video image by the mobile phone 100 in the screen recording process. For example, in a video call process, if sensitive information of the user B appears in the second video image sent by the mobile phone 200 to the mobile phone 100, the user B may select a "Yes" control, and the mobile phone 200 sends, to the mobile phone 100, the screen recording response indicating that the mobile phone 100 is not allowed to perform screen recording on the second video image. After receiving the screen recording response, the mobile phone 100 performs sensitive information leakage prevention processing on the video image information sent by the mobile phone 200 to the mobile phone 100, or the mobile phone 100 stops screen recording.

In another implementation of this application, the mobile phone 200 may determine, by using a heartbeat message, that the mobile phone 100 is currently in a recording state. When receiving the heartbeat message, the mobile phone 200 may display, on the interface of the mobile phone 200, a prompt box 706 shown in FIG. 4G, to prompt the user B. If the user B does not allow the mobile phone 100 to perform screen recording on the second video image, or the user changes from not allowing the mobile phone 100 to perform screen recording on the second video image to allowing the mobile phone 100 to perform screen recording on the second video image, a state of allowing or not allowing can be changed by using a display interface.

In addition, in another implementation of this application, the screen recording risk prompt information may further display a screen recording risk level. The screen recording risk level may be represented by a percentage. A larger percentage value indicates a higher sensitivity level. For example, "The screen recording risk level is 98%" is displayed. The screen recording risk level determined by the mobile phone 200 based on the image recognition algorithm may be determined based on a quantity of facial features of the user B in a video call. For example, a larger quantity of facial features of the user B indicates a higher risk level, and a smaller quantity of facial features of the user B indicates a lower risk level.

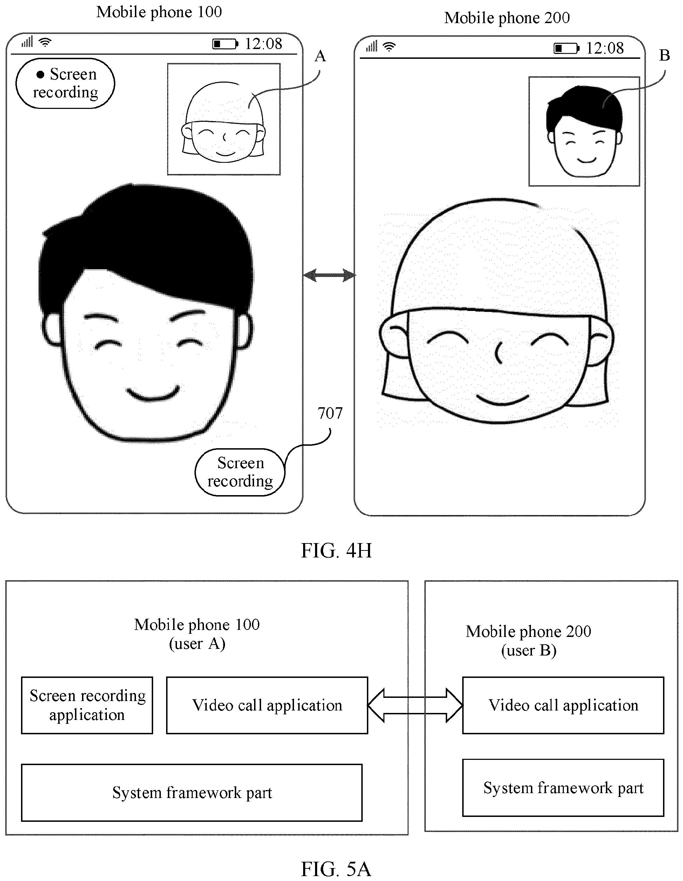

Further, in this application, the video call function and the screen recording function may be implemented by using the foregoing independent video call application and screen recording application. Alternatively, the video call function and the screen recording function may be integrated into a chat application. For example, WeChat includes the video call function. When a video call is performed, a screen recording control 707 shown in FIG. 4H may be further provided on an interface of the video call. The user may enable or disable the screen recording function by triggering the screen recording control 707.

In addition, in this application, the mobile phone 100 may receive the screen recording instruction by using a tap/trigger operation performed by the user on the screen recording application 10, or may receive the screen recording instruction by using another operation such as voice input or a sliding operation performed by the user on the screen. In addition, the screen recording instruction may be received by using a control in a screen drop-down menu of the mobile phone 100. This may be set based on a requirement.

According to the screen recording method provided in this implementation, when the mobile phone 100 needs to perform screen recording on the second image information sent by the mobile phone 200, the mobile phone 100 sends a screen recording request to the mobile phone 200. After receiving the screen recording request, the mobile phone 200 determines, by determining whether the mobile phone 100 is always allowed to perform screen recording on the second video image, and determining, through an image recognition algorithm, whether the second video image includes sensitive information, and by using a manual selection of the user, whether the mobile phone 100 is allowed to perform screen recording on the second video image, and the mobile phone 200 sends a screen recording response to the mobile phone 100, so that the mobile phone 100 determines, based on the screen recording response, whether to perform screen recording on the second video image. In this way, the mobile phone 200 serving as the recorded party can interfere with screen recording performed by the mobile phone 100 on the second video image, thereby improving screen recording security.

Referring to FIG. 5A, this application provides a screen recording system. The screen recording system includes a mobile phone 100 and a mobile phone 200. The mobile phone 100 and the mobile phone 200 may establish a video call communication channel by using respective video call applications to perform a video call. Based on the screen recording method of the screen recording system, a screen recording request and a screen recording response may be transmitted between the mobile phone 100 and the mobile phone 200 by using the video call communication channel.

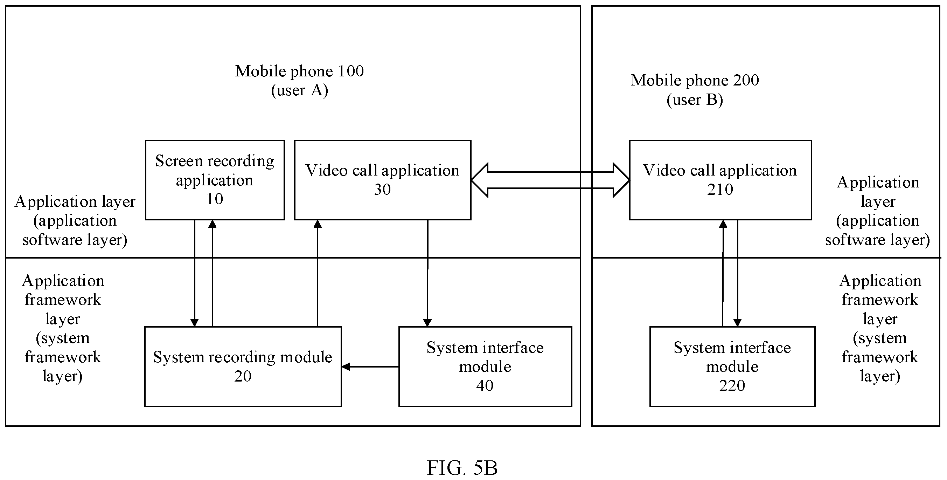

Further, referring to FIG. 5B, in the screen recording system provided in this application, an application layer (application software layer) of the mobile phone 100 includes a screen recording application 10 and a video call application 30, an application framework layer (system framework layer) includes a system recording module 20 and a system interface module 40. An application layer (application software layer) of the mobile phone 200 includes a video call application 210, and an application framework layer (system framework layer) includes a system interface module 220.

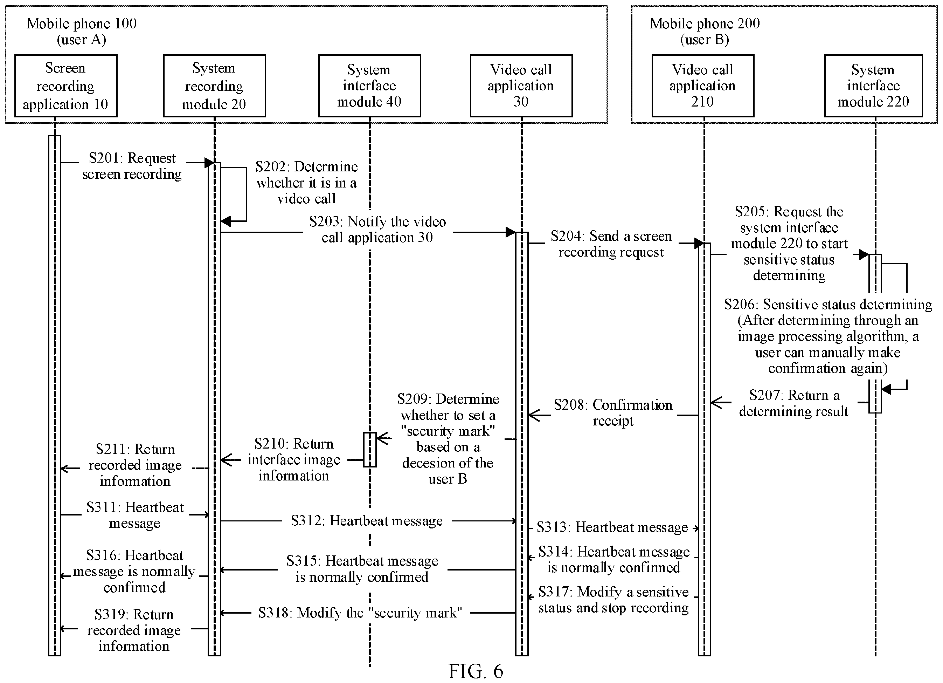

Referring to FIG. 6, this application provides a screen recording method, including the following steps.

S201: The screen recording application 10 in the mobile phone 100 receives a screen recording instruction of a user A, and the screen recording application 10 sends a screen recording request to the system recording module 20 in the mobile phone to request screen recording.

S202: After receiving the screen recording request, the system recording module 20 first determines whether a system of the mobile phone 100 is currently in a video call. If the system is in a video call, the following procedure starts.

S203: The system recording module 20 sends a screen recording request to the video call application 30 that is in a video call, to notify the video call application 30 that the screen recording application 10 requests screen recording, so that the video call application 30 enters a procedure of determining whether screen recording can be performed.

S204: The video call application 30 sends a screen recording request to the video call application 210 in the mobile phone 200 by using a communication channel established for the current video call.

S205: After receiving the screen recording request sent by the video call application 30 of the mobile phone 100, the video call application 210 of the mobile phone 200 notifies the system interface module 220 of the mobile phone 200 to determine whether local video image information (second video image information) of the current video call includes sensitive information (a sensitive state is determined).

S206: The system interface module 220 performs sensitive state analysis (determining) on the second video image information that the mobile phone 200 currently needs to send to the mobile phone 100, and determines whether the second video image information includes sensitive information to obtain a sensitive analysis result. The system interface module 220 generates a screen recording response corresponding to the screen recording request based on the sensitive analysis result, or generates prompt information based on the sensitive analysis result, so that the user manually confirms again whether screen recording is allowed, and then the system interface module 220 generates a screen recording response based on a manual confirmation result of the user.

S207: The system interface module 220 returns the screen recording response (the determining result) to the video call application 210, so that the video call application 210 may send the screen recording response of the mobile phone 200 to the mobile phone 100 by using the communication channel established for the video call.

S208: The video call application 210 returns the screen recording response to the video call application 30 of the mobile phone 100 by using the communication channel established for the video call, and the video call application 30 confirms whether the screen recording response is received (that is, a confirmation receipt of the video call application 30). The screen recording response may be "the mobile phone 100 is allowed to perform screen recording on the second video image" or "the mobile phone 100 is not allowed to perform screen recording on the second video image".

S209: After receiving the screen recording response of the mobile phone 200, the video call application 30 of the mobile phone 100 determines, based on the screen recording response, whether a "security mark" needs to be added to a currently displayed interface image. If the screen recording response is "the mobile phone 100 is allowed to perform screen recording on the second video image", the "security mark" does not need to be added, and the video call application 30 returns the interface image information to the system interface module 40; or if the screen recording response is "the mobile phone 100 is not allowed to perform screen recording on the second video image", the "security mark" needs to be added, and the video call application 30 returns, to the system interface module 40, the interface image information to which the "security mark" is added.

In addition, if the mobile phone 200 does not return the screen recording response within a specified time period, the video call application 30 also needs to add the "security mark" to the interface image information.

S210: The system interface module 40 determines, based on the received interface image information and whether there is the "security mark" in the interface image information, recorded image information to be transmitted to the system recording module 20. If there is no "security mark", the interface image information transmitted by the system interface module 40 is returned to the system recording module; or if there is the "security mark", the interface image information is processed (for example, the obtained image information is cleared or set to a black screen) and then returned to the system recording module 20.

S211: The system recording module 20 returns the final interface image information to the screen recording application 10 at the application framework layer.

After obtaining the interface image information, the screen recording application 10 converts the interface image information into a preset video format, writes the interface image information into a system memory of the mobile phone 100, and saves the interface image information as a video file. If the interface image information is not cleared in this case, there is a screen recording image in the saved video file. If the image information is cleared or sent to a black screen, the saved video file is also displayed as a black screen.

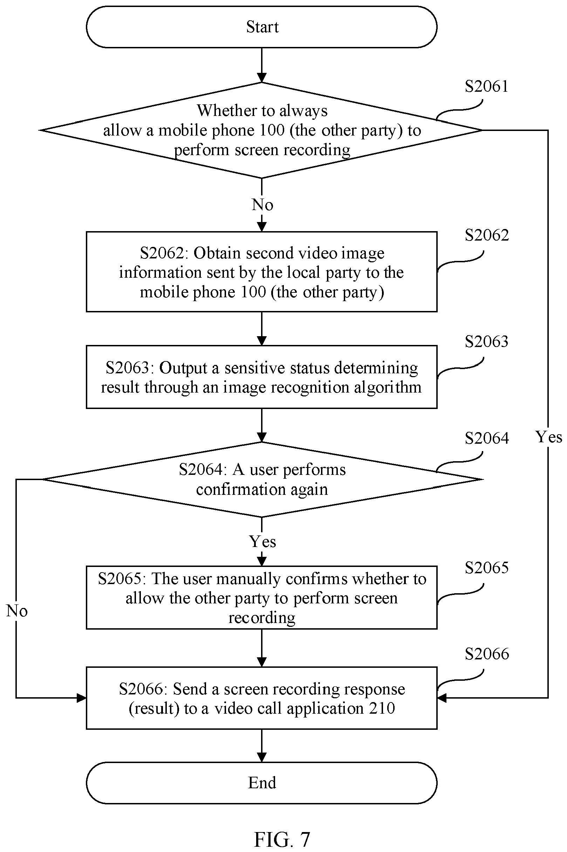

In addition, referring to FIG. 7, for S206, the system interface module 220 in the mobile phone 200 determines whether the video image information is in a sensitive state and obtains a sensitivity analysis result by determining the video image information currently sent by the mobile phone 200 to the mobile phone 100, and the process includes the following steps.

S2061: The system interface module 220 of the mobile phone 200 determines whether the mobile phone 200 is set to always allow the mobile phone 100 to perform screen recording on the mobile phone 200 in a video call process, that is, whether the mobile phone 200 always allows screen recording of a video peer party. If no, S2062 is performed. If yes, S2066 is performed.

That the mobile phone 200 may set, by using the default screen recording permission setting control 701, whether to allow the mobile phone 100 to perform screen recording on the mobile phone 200 in a video call process.

In addition, the mobile phone 200 may alternatively determine, based on whether the mobile phone 200 allows the mobile phone 100 to perform screen recording in a historical video call process (for example, a previous video call), whether the mobile phone 200 allows the mobile phone 100 to perform screen recording on the second video image in a current call process. For example, if the mobile phone 100 is allowed to perform screen recording in a video call in a previous video call process, the mobile phone 100 may be allowed to perform screen recording in a video call by default in a current video call. If the mobile phone 100 is not allowed to perform screen recording in a video call in a previous video call, the mobile phone 100 is also not allowed to perform screen recording in a current video call.

S2062: The system interface module 220 obtains the second video image information sent by the mobile phone 200 to the mobile phone 100.

S2063: The system interface module 220 identifies the second video image through an image recognition algorithm, to determine whether the second video image information includes a user portrait of the user B. If the second video image information includes the user portrait, it is considered that the second video image information includes sensitive information; or if the second video image information does not include the user portrait, it is considered that the second video image information does not include sensitive information.

As a recorded party, the mobile phone 200 identifies a sensitive state through an image processing algorithm to determine whether to allow the peer mobile phone 100 to perform screen recording, so that a user determines whether to allow screen recording more intelligently.

S2064: The system interface module 220 determines whether it is preset that the user needs to confirm again whether to allow screen recording. If yes, S2065 is performed. If no, S2066 is performed.

S2065: The system interface module 220 receives the screen recording instruction of the user, and then performs S2066.

S2066: The system interface module 220 obtains the screen recording response, and sends the screen recording response to the video call application 210.

That the system interface module 220 obtains the screen recording response may be: if it is not set that the user needs to perform confirmation again, the final screen recording response is directly determined based on the determining result obtained through the image recognition algorithm. For example, if the mobile phone 200 considers, through the image recognition algorithm, that the second video image information includes sensitive information, the screen recording response is "the mobile phone 100 is not allowed to perform screen recording on the second video image", and the "security mark" needs to be added. If the mobile phone 200 considers, through the image recognition algorithm, that the second video image information does not include sensitive information, the screen recording response is "the mobile phone 100 is allowed to perform screen recording on the second video image", and the "security mark" does not need to be added.

If it is set that the user needs to perform confirmation again, regardless of the determining result obtained through the image recognition algorithm, the screen recording response needs to be determined based on a selection of the user B. If the user B chooses to allow the mobile phone 100 to perform screen recording on the second video image, the screen recording response is "the mobile phone 100 is allowed to perform screen recording on the second video image", and the "security mark" does not need to be added. If the user B chooses not to allow the mobile phone 100 to perform screen recording on the second video image, the screen recording response is "the mobile phone 100 is not allowed to perform screen recording on the second video image", and the security label needs to be added, that is, a final result determined by the user B is used.

Further, referring to FIG. 6, in the screen recording method provided in this application, after starting recording, the screen recording application 10 of the mobile phone 100 needs to periodically send a heartbeat message to the mobile phone 200 by using the system recording module 20 and by using the communication channel established for the video call, to notify the mobile phone 200 that the mobile phone 200 is currently in a recording state. Therefore, after step S211, the method may further include the following steps.

S311: The screen recording application 10 of the mobile phone 100 periodically sends a heartbeat message to the system recording module 20.

S312: The system recording module 20 sends a heartbeat message to the video call application 30.

S313: The video call application 30 sends a heartbeat message to the video call application 210 of the mobile phone 200 by using the communication channel established for the video call, to prompt that the mobile phone 200 is currently in a recording state.

S314: The video call application 210 of the mobile phone 200 sends a message indicating that the heartbeat message is normally confirmed to the video call application 30 of the mobile phone 100.

S315: The video call application 30 returns a message indicating that the heartbeat message is normally confirmed to the system recording module 20.

S316: The system recording module 20 returns, to the screen recording application 10, a message indicating that the heartbeat message is normally confirmed.

The mobile phone 200 may confirm, by using the heartbeat message, that the mobile phone 100 is currently in a recording state. If the screen recording application 10 of the mobile phone 100 does not receive, due to a network exception or the like, a message indicating that the heartbeat message is normally confirmed, the screen recording application 10 needs to immediately stop recording, to prevent a case in which the mobile phone 100 still performs recording after the mobile phone 200 does not allow recording due to a network exception.

In this application, if the mobile phone 200 detects a modification operation performed by the user B on a screen recording permission status, the screen recording method provided in this application may further include the following steps.

S317: The video call application 210 of the mobile phone 200 sends, to the video call application 30 of the mobile phone 100, information about changing a sensitive state and stopping recording.

S318: After receiving the information about changing the sensitive state and stopping recording, the video call application 30 feeds back information about modifying the "security mark" to the system recording module 20. The system interface module 40 modifies the "security mark", and the system interface module 40 returns latest interface image information to the system recording module 20. For example, if the interface image is sensitive before, the interface image may be modified to be insensitive; or if the interface image is insensitive before, the interface image may be modified to be sensitive.

S319: The system recording module 20 returns latest recorded image information to the screen recording application 10 based on information about the modified "security mark". For example, if a latest requirement of the mobile phone 200 is that screen recording is not allowed, a screen recording effect of the mobile phone 100 changes to a black screen. If a requirement of the mobile phone 200 is changed from not allowing screen recording to allowing screen recording, the screen recording effect of the mobile phone 100 changes from a black screen to a normal screen.

According to the screen recording method provided in this application, in a scenario in which the mobile phone 100 and the mobile phone 200 perform a video call, after the user A of the mobile phone 100 starts screen recording, a local application framework layer of the mobile phone 100 notifies the video call application 110 in a foreground of the mobile phone 100. The video call application 110 sends a screen recording request message to a peer user by using a communication channel for the video call, that is, sends the request message to the mobile phone 200, so that the mobile phone 200 can determine whether the mobile phone 100 is allowed to perform screen recording on a second video image. Then, the mobile phone 200 returns a determining result to the application framework layer of the mobile phone 200, to interfere with a final recording result.

For example, after the mobile phone 100 starts screen recording, the mobile phone 200 does not allow the mobile phone 100 to record the second video image. The system interface module 40 at the application framework layer of the mobile phone 100 sets a "security mark" for an interface image, so that a video file obtained by the mobile phone 100 through screen recording is a black screen, thereby protecting video image information of the mobile phone 200 of the peer user. If the mobile phone 200 allows screen recording, the mobile phone 100 can normally perform recording. In addition, even if the mobile phone 200 previously allows screen recording, when the other party is not allowed to perform screen recording due to another reason, a recording status may be changed. In this case, a video subsequently recorded by the mobile phone 100 becomes a black screen, so that the second video image information of the mobile phone 200 is protected.

According to the screen recording method provided in this application, the recorded party may interfere with a recording procedure of the recorder. If the recorded party does not allow the recorder to record, the recorder cannot obtain image information of the recorded party.

In addition, main logic processing of the screen recording method provided in this application is performed at the application framework layer. Therefore, a screen recording application at the application layer may be seamlessly connected to the system, and both a third-party screen recording application and a video call application may use the system. The video call application may use the system only by transmitting determining of a user, so that system scalability is relatively strong.

In addition, a linkage mechanism of "screen recording application-system recording module-system interface module-video call application" spans the application layer and the application framework layer, so that the video call application can sense an operation of the screen recording application, and then notify a peer user to decide whether to allow screen recording.

The system of the mobile phone 100 transfers the operation information of the mobile phone 100 to the mobile phone 200 of the peer party by using the communication channel established during the video call, so that the recorded party can sense an operation performed by the recorder, and interfere with and make a decision on the screen recording operation. In this way, the mobile phone 200 can manage screen recording of the mobile phone 100 as the video peer end during the video call, thereby improving screen recording security.

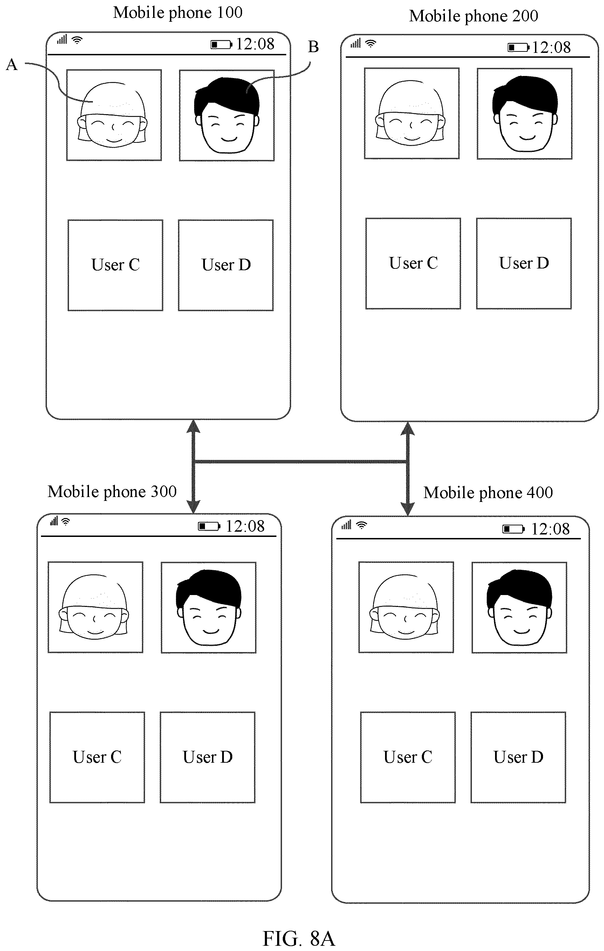

The screen recording method provided in this application may also be applied to a scenario in which a plurality of persons (a plurality of parties) perform a video call. Referring to FIG. 8A, in an example of the scenario in which a plurality of persons perform a video call, in addition to the mobile phone 100 and the mobile phone 200, a mobile phone 300 and a mobile phone 400 are further included. A user of the mobile phone 300 is a user C, a user of the mobile phone 400 is a user D, and a video call is established between the mobile phone 100, the mobile phone 200, the mobile phone 300, and the mobile phone 400. In addition, a display interface of each mobile phone displays a user video image of each party in the call.

It should be noted that in this implementation, the mobile phone 100, the mobile phone 200, the mobile phone 300, and the mobile phone 400 all include the foregoing video call application, and have a video call function. In addition, at least the mobile phone 100 includes the foregoing screen recording application, and has a screen recording function.

During a multi-party video call, the mobile phone 100 performs screen recording. To prevent user portraits of users in the video call from being leaked, the local video call application 110 of the mobile phone 100 needs to wait until all users in the video call agree to screen recording, and then returns interface image information of normal screen recording (that is, no "security mark" needs to be added). Otherwise, the "security mark" needs to be added.

In the multi-party video call scenario, for S204, the video call application 30 in the mobile phone 100 may send a screen recording request to video call applications in the mobile phone 200, the mobile phone 300, and the mobile phone 400 that perform the video call. Then, for step S209, the system interface module 40 in the mobile phone 100 needs to wait until all mobile phones return screen recording responses, and then performs determining.

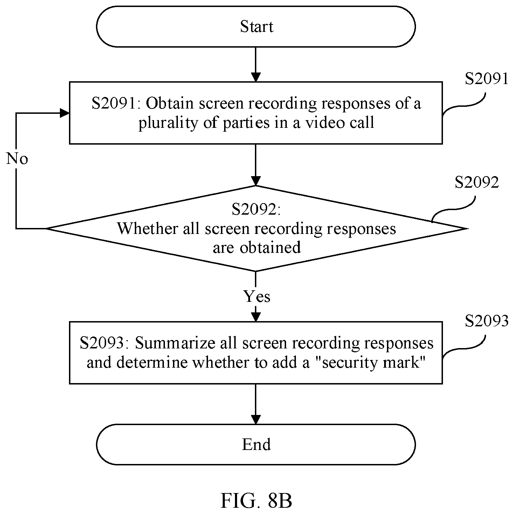

Referring to FIG. 8B, a process in which the mobile phone 100 determines whether to add the "security mark" includes the following steps.

S2091: The system interface module 40 in the mobile phone 100 obtains screen recording responses returned by the plurality of parties (all remote users) of the video call.

S2092: The system interface module 40 in the mobile phone 100 determines whether all screen recording responses are obtained, and if yes, performs S2093, or if not, performs S2091 to continue to obtain screen recording responses.

In addition, it should be noted that the screen recording response may be obtained within a preset time period. If a corresponding screen recording response is not obtained within the preset time period, it is considered that the screen recording response is "the mobile phone 100 is not allowed to perform screen recording on the second video image".

The preset time period may be set based on a requirement, for example, may be any value such as 1s, 3s, 5.5s, or 10s.

S2093: That the system interface module 40 in the mobile phone 100 determines, based on all screen recording responses, whether to add the "security mark" may be that the system interface module 40 determines whether all other video call applications return screen recording responses. If all other video call applications return screen recording responses and all screen recording responses are "the mobile phone 100 is allowed to perform screen recording on the second video image", the "security mark" does not need to be added. If not all users return screen recording responses, or if not all screen recording responses are "the mobile phone 100 is allowed to perform screen recording on the second video image", the "security mark" needs to be added.

In this implementation, for a multi-party video call scenario, screen recording responses returned by other parties in a video call are collected and then processed. If a user does not agree to screen recording, a current multi-party video image cannot be recorded.

In addition, in this implementation, the mobile phone 100 may further determine, based on all screen recording responses, a range in which the mobile phone 100 is allowed to perform screen recording on the second video image. For example, the mobile phone 100 may perform screen recording only on a video image part of a user whose screen recording response is "the mobile phone 100 is allowed to perform screen recording on the second video image", and does not perform screen recording on a video image part of a user whose screen recording response is "the mobile phone 100 is not allowed to perform screen recording on the second video image".

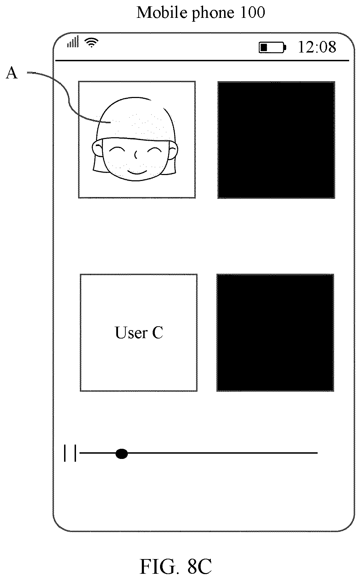

For example, as shown in FIG. 8C, when the mobile phone 100 plays a screen recording video, it may be seen that the mobile phone 100 performs screen recording only on video images of the user B and the user C, and does not perform screen recording on video image information of the user B and the user D that do not allow screen recording.

In another implementation of this application, the screen recording method provided in this application may also be applied to a live video broadcast scenario.

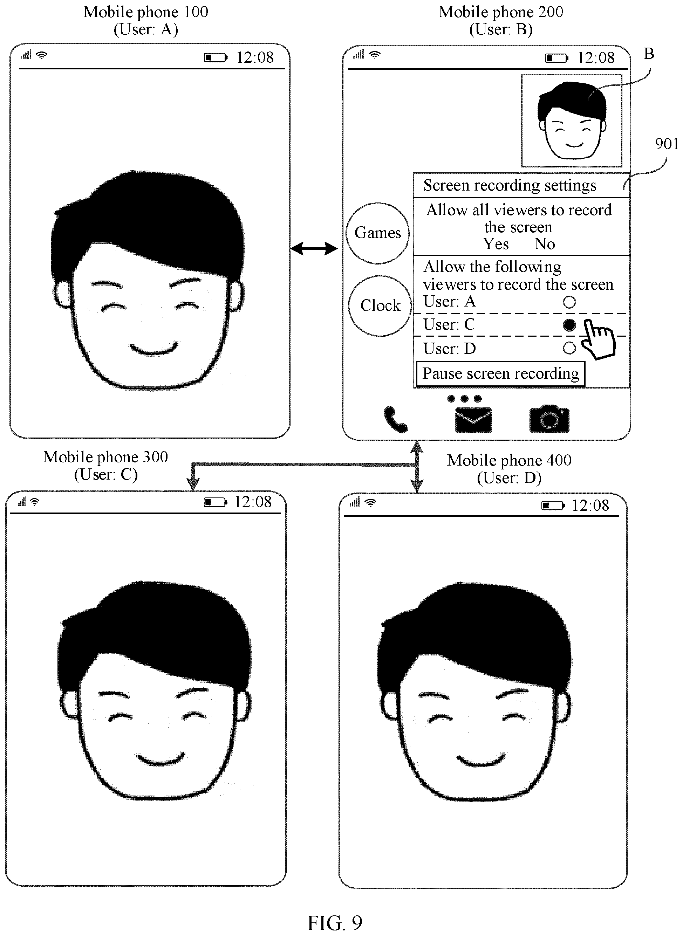

Referring to FIG. 9, the mobile phone 100, the mobile phone 300, and the mobile phone 400 may be used as mobile phones of users watching live broadcast, and the mobile phone 200 may be used as a mobile phone of a user performing live broadcast. Display interfaces of the mobile phone 100, the mobile phone 200, the mobile phone 300, and the mobile phone 400 are shown in FIG. 9. The mobile phone 100, the mobile phone 300, and the mobile phone 400 display camera images of the live broadcaster, and the mobile phone 200 displays camera images of the live broadcaster and displays a home screen of the live broadcaster.

It should be noted that in this implementation, the mobile phone 100, the mobile phone 200, the mobile phone 300, and the mobile phone 400 each include a live video broadcast application that implements a video live broadcast function, and have a video live broadcast function and a video viewing function. In addition, the mobile phone 100, the mobile phone 300, and the mobile phone 400 include the foregoing screen recording application, and have a screen recording function.

If the mobile phone 100 requests screen recording, a process of performing screen recording between the mobile phone 100 and the mobile phone 200 is the same as the foregoing process, except that the video live broadcast application performs the foregoing operation of the video call application. Details are not described in this application again.

In addition, when the video live broadcaster initiates screen recording to the live broadcaster, a display interface that includes a screen recording setting box 901 shown in FIG. 9 may be displayed on the interface of the live broadcaster. The live broadcaster may set that screen recording is allowed for all viewers, or may set that screen recording is not allowed for all live broadcasters. In addition, when a screen recording request is received, the live broadcaster may set whether screen recording is allowed for a single viewer, or may set that screen recording is paused.

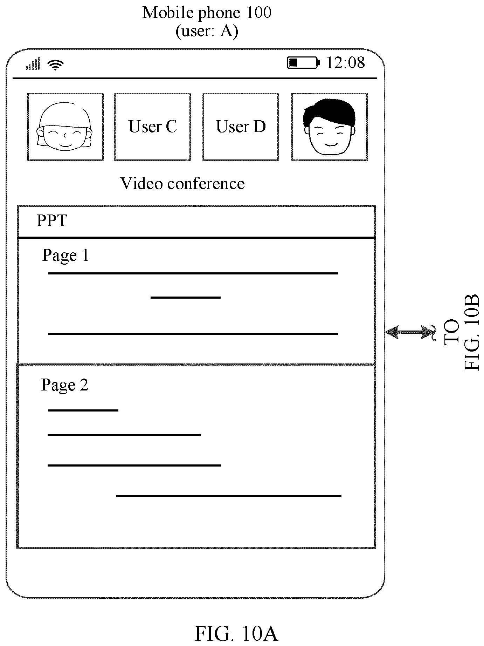

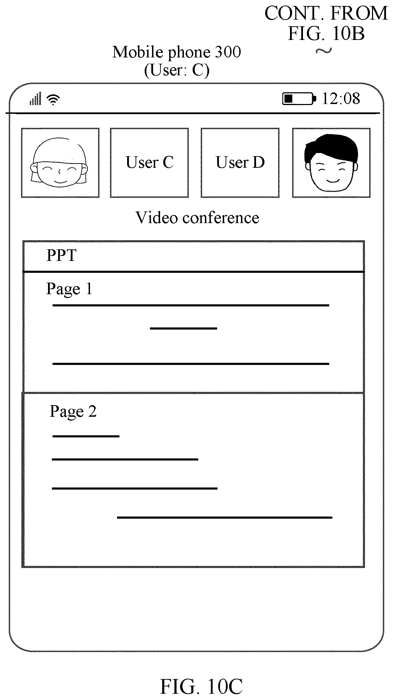

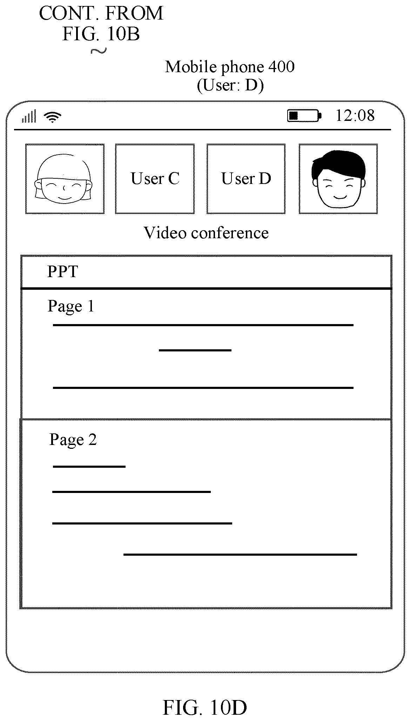

In another implementation of this application, the screen recording method provided in this application may also be applied to a video conference scenario and a screen sharing scenario. As shown in FIG. 10A to FIG. 10D, a multi-party video conference is performed, and the mobile phone 200 shares a screen of the mobile phone 200 with the mobile phone 100, the mobile phone 300, and the mobile phone 400. In a video conference and screen sharing scenario, if the mobile phone 200 detects a trigger operation performed by a user on a control 902 that is used to set a region in which the user is allowed to perform screen recording, a region selection box 903 is displayed, so that the user B drags a position and a size of the selection box 903 to select a region in which screen recording is allowed.

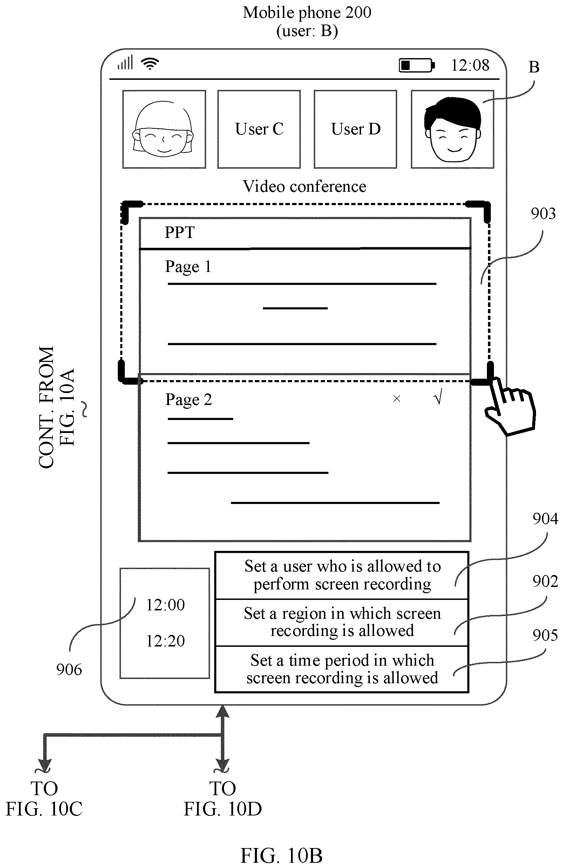

In addition, the mobile phone 200 further includes a control 905 used by the user to set a time for allowing the user to perform screen recording. When the user taps the control 905, a time setting box 906 shown in FIG. 10B may be displayed, so that the user selects a time period for allowing screen recording. The mobile phone 200 sends the time information to the mobile phone 100 by using a screen recording response, so that the mobile phone 100 can determine, based on the time information, a time for performing screen recording.

In addition, the mobile phone 200 further includes a control 904 used by the user to set a user that is allowed to perform screen recording. A setting manner of the control 904 may be similar to a setting manner of the control 901 in FIG. 9. Details are not described herein again.

The mobile phone 200 may set an area, a time, and a user that is allowed to perform screen recording after the mobile phone 200 receives a screen recording request based on a trigger operation performed by the user B, or the mobile phone 200 may perform setting based on a trigger operation performed by the user B.

The video conference scenario may be similar to the foregoing multi-party video call scenario, and only video images of multiple parties performing a video conference are displayed, but screen sharing is not performed.

In addition, in an application scenario of screen sharing, only screen sharing may be separately performed, and a video conference or a video call is not performed. Details are not described in this application.

The screen recording method provided in this application may be applied to screen recording in the foregoing scenarios such as a video call scenario, a video live broadcast scenario, a video conference scenario, and a screen sharing scenario. In a screen recording process, a recorded party may determine whether to allow a recorder to perform screen recording, and the recorded party may manage a screen recording process of the recorder, to prevent the recorder from obtaining sensitive information of the recorded party and causing leakage of the sensitive information of the recorded party, thereby improving screen recording security.

In embodiments of this application, the electronic device is an electronic device that can perform wireless communication with another electronic device, and the electronic device has a screen and has at least one of functions such as a video call function, a video live broadcast function, a video conference function, and a screen sharing function. The electronic device is not limited to a device such as a desktop type, a laptop type, a tablet or a handheld computer, a cellular phone, or a PDA.

In this application, the video call function, the video live broadcast function, the video conference function, and the screen sharing function may be separately implemented by independent applications. Certainly, the video call function, the screen sharing function, and the video conference function may alternatively be implemented by a same application, or another function may be implemented by a same application. This may be set based on a requirement.

It should be noted that, that the mobile phone 200 determines whether sensitive information is included may be as follows: The mobile phone 200 determines, when a home screen is shared in a scenario such as a video conference, live video broadcast, or interface sharing, whether an application corresponding to a current display interface includes a built-in "security mark". For example, if the display interface includes a bank APP, a "security mark" is set on a payment interface of the bank APP. In this case, the system interface module obtains the "security mark", and considers that the display interface includes sensitive information.

If the application corresponding to the current display interface does not have a built-in "security mark", the mobile phone 200 may identify a sensitive word on the current interface based on a dictionary, to determine whether a sensitive word involving pornography, violence, and money transaction is included, so as to determine whether sensitive information is included. In addition, the mobile phone 200 may further identify a color and texture of the current display interface image based on a feature vector, to determine whether a sensitive image involving pornography and violence is included, so as to determine whether sensitive information is included. Identification and determining of sensitive information can be set based on a requirement.

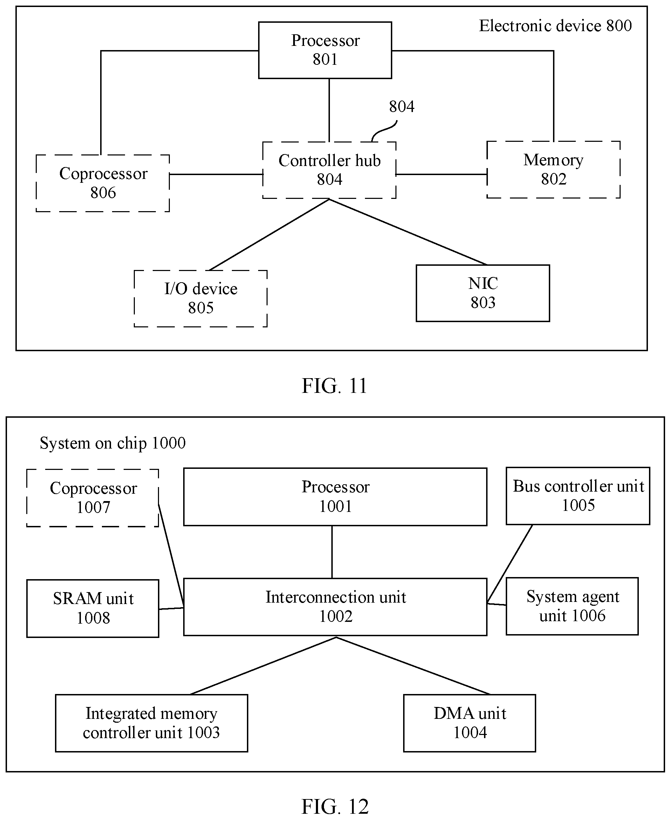

In some embodiments of this application, an electronic device is further provided. The following describes the electronic device in embodiments of this application with reference to FIG. 11.

FIG. 11 is a schematic diagram of a structure of an electronic device disclosed in an embodiment of this application. In at least one embodiment, a controller hub 804 communicates with a processor 801 through a multi-branch bus such as a front side bus (FSB), a point-to-point interface such as a quick path interconnect (QPI), or a similar connection. The processor 801 executes instructions for controlling a general type of data processing operation. In an embodiment, the controller hub 804 includes but is not limited to a graphics memory controller hub (GMCH) (not shown in the figure) and an input/output hub (IOH) (which may be on separate chips) (not shown in the figure). The GMCH includes a memory and a graphics controller, and is coupled to the IOH.

The electronic device 800 may further include a coprocessor 806 and a memory 802 that are coupled to the controller hub 804. Alternatively, at least one of the memory 802 and the GMCH may be integrated into the processor 801 (as described in this application), and the memory 802 and the coprocessor 806 are directly coupled to the processor 801 and the controller hub 804. The controller hub 804 and the IOH are located in a single chip.

In an embodiment, the memory 802 may be, for example, a dynamic random access memory (DRAM), a phase change memory (PCM), or a combination thereof. The memory 802 may include one or more tangible and non-transitory computer-readable media for storing data and/or instructions. The computer-readable storage medium stores instructions, and specifically, stores temporary and permanent copies of the instructions.

In an embodiment, the coprocessor 806 is a dedicated processor such as a high-throughput MIC processor, a network or communications processor, a compression engine, a graphics processor, a GPU, or an embedded processor. An optional property of the coprocessor 806 is shown by a dashed line in FIG. 11.

In an embodiment, the electronic device 800 may further include a network interface (NIC) 803. The network interface 803 may include a transceiver, configured to provide a radio interface for the device 800 to communicate with any other proper device (such as a front-end module or an antenna). In various embodiments, the network interface 803 may be integrated with another component of the electronic device 800. The network interface 803 can implement a function of the communications unit in the foregoing embodiment.

In an embodiment, as shown in FIG. 11, the electronic device 800 may further include an input/output (I/O) device 805. The input/output (I/O) device 805 may include: a user interface, where this design enables a user to interact with the electronic device 800; a peripheral component interface, where this design enables the peripheral component can also interact with the electronic device 800; and/or a sensor, where this design is configured to determine an environmental condition and/or location information related to electronic device 800.

It should be noted that FIG. 11 is merely an example. To be specific, although FIG. 11 shows that the electronic device 800 includes a plurality of components such as the processor 801, the controller hub 804, and the memory 802, in actual application, a device using the methods in this application may include only some of the components of the electronic device 800. For example, the device includes only the processor 801 and the NIC 803. In FIG. 11, properties of the optional components are shown by using dashed lines.

In some embodiments of this application, the instructions stored in the computer-readable storage medium of the electronic device 800 may include instructions that cause the device to implement the foregoing screen recording method when the instructions are executed by at least one unit of the processor. When the instructions are run on a computer, the computer is enabled to perform the foregoing screen recording method.

Referring to FIG. 12, FIG. 12 is a schematic diagram of a structure of an SoC (System on Chip, system on chip) 1000 according to an implementation of this application. In FIG. 12, similar components have a same reference numeral. In addition, a dashed-line box represents an optional feature of a more advanced SoC 1000. The SoC 1000 may be configured to be used in any electronic device in this application, and may implement corresponding functions based on different devices in which the SoC 1000 is located and different instructions stored in the SoC 1000.

In FIG. 12, the SoC 1000 includes an interconnection unit 1002 coupled to a processor 1001, a system agent unit 1006, a bus controller unit 1005, an integrated memory controller unit 1003, a group of coprocessors 1007 or one or more coprocessors 1007 that may include integrated graphics logic, an image processor, an audio processor, and a video processor, an SRAM (static random access memory) unit 1008, and a DMA (direct memory access) unit 1004. In an embodiment, the coprocessor 1007 includes a dedicated processor, for example, a network or communications processor, a compression engine, a GPGPU, a high throughput MIC processor, or an embedded processor.

The SRAM unit 1008 may include one or more computer-readable storage media, configured to store data and/or instructions. The computer-readable storage medium may store instructions, and specifically, store temporary and permanent copies of the instructions. The instructions may include instructions that enable an electronic device to implement the foregoing screen recording method when the instructions are executed by at least one unit in the processor.

Embodiments of the mechanism disclosed in this application may be implemented in a manner such as software, hardware, firmware, or a combination of these implementation methods. Embodiments of this application may be implemented as a computer program or program code executed on a programmable system. The programmable program includes at least one processor and a memory (or a storage system, including volatile and non-volatile memories and/or a storage unit).

It should be noted that the terms "first", "second", and the like are merely used for distinction and descriptions, but cannot be understood as indicating or implying relative importance.

It should be noted that, in the accompanying drawings, some structural or method features may be shown in a particular arrangement and/or order. However, it should be understood that such a particular arrangement and/or order may not be required. In some embodiments, these features may be arranged in a manner and/or order different from that shown in the descriptive accompanying drawings. In addition, inclusion of the structural or method features in a particular figure does not imply that such features are required in all embodiments, and in some embodiments, these features may not be included or may be combined with other features.

Although this application has been illustrated and described with reference to some preferred implementations of this application, a person of ordinary skill in the art should understand that the foregoing content is further detailed descriptions of this application with reference to specific implementations, and it cannot be considered that specific implementations of this application are merely limited to these descriptions. A person skilled in the art may make various changes in form and details, including making several simple deductions or replacements, without departing from the spirit and scope of this application.

## Claims

1. A screen recording method, wherein the method is applied to a system comprising a first electronic device and a second electronic device, the first electronic device establishes a communication connection to the second electronic device, the second electronic device provides target display content for the first electronic device, so that the target display content is displayed on a screen of the first electronic device, and the method comprises:
receiving, by the first electronic device, a screen recording instruction, wherein the screen recording instruction is used to instruct the first electronic device to record the target display content displayed on the screen of the first electronic device;
sending, by the first electronic device, a screen recording request for performing screen recording on the target display content to the second electronic device based on the screen recording instruction;
receiving, by the second electronic device, the screen recording request, generating, based on the target display content, a screen recording response corresponding to the screen recording request, and sending the screen recording response to the first electronic device; and
receiving, by the first electronic device, the screen recording response, and performing screen recording on the target display content based on the screen recording response.

2. The screen recording method according to claim 1, wherein the second electronic device generates the screen recording response in at least one of the following manners:
generating, by the second electronic device, the screen recording response based on preset default screen recording permission information of the target display content;
performing, by the second electronic device, sensitive information analysis on the target display content sent by the second electronic device to the first electronic device for display, to obtain a sensitivity analysis result, and generating the screen recording response based on the sensitivity analysis result; or
receiving, by the second electronic device by using a screen recording instruction input control of the second electronic device, a screen recording instruction of a user for the target display content, and generating the screen recording response based on the screen recording instruction.

3. The screen recording method according to claim 2, wherein the default screen recording permission information comprises:
screen recording information indicating that the second electronic device always allows the first electronic device to perform screen recording on the target display content; or
screen recording information indicating that the second electronic device does not always allow the first electronic device to perform screen recording on the target display content.

4. The screen recording method according to claim 2, wherein the method further comprises:
the second electronic device comprises a default screen recording permission setting control, and
determining, by the second electronic device, the default screen recording permission information based on a trigger operation performed by the user on the default screen recording permission setting control.

5. The screen recording method according to claim 2, wherein the sensitive information comprises at least one piece of the following information:
sensitive indication information of a source application of the target display content;
sensitive text information in the target display content; and
sensitive image information in the target display content.

6. The screen recording method according to claim 2, wherein the method further comprises:
generating, by the second electronic device, sensitive prompt information based on the sensitivity analysis result, and displaying the sensitive prompt information on a display interface of the second electronic device.

7. The screen recording method according to claim 2, wherein the method further comprises:
the second electronic device comprises a screen recording instruction input management control, and
if the second electronic device detects an enabling operation performed by the user on the screen recording instruction input management control, displaying, by the second electronic device, the screen recording instruction input control when a display condition is met; and
if the second electronic device detects a disabling operation performed by the user on the screen recording instruction input management control, skipping displaying, by the second electronic device, the screen recording instruction input control.

8. The screen recording method according to any one of claims 2 to 7, wherein the method comprises:
if the second electronic device determines, based on the default screen recording permission information, that the first electronic device is always allowed to perform screen recording on the target display content, generating, by the second electronic device, a screen recording response indicating that the first electronic device is allowed to perform screen recording on the target display content;
if the second electronic device determines, based on the default screen recording permission information, that the first electronic device is not always allowed to perform screen recording on the target display content, and the sensitivity analysis result is that the sensitivity is greater than or equal to a preset sensitivity threshold, generating, by the second electronic device based on the sensitivity analysis result, a screen recording response indicating that the first electronic device is not allowed to perform screen recording on the target display content; or
if the second electronic device determines, based on the default screen recording permission information, that the first electronic device is not always allowed to perform screen recording on the target display content, and the sensitivity analysis result is that the sensitivity is less than a preset sensitivity threshold, displaying, by the second electronic device, the screen recording instruction input control; and based on a screen recording instruction of the user determined by the screen recording instruction input control, generating a screen recording response indicating that the first electronic device is allowed to perform screen recording on the target display content, or a screen recording response indicating that the first electronic device is not allowed to perform screen recording on the target display content.

9. The screen recording method according to claim 8, wherein the screen recording instruction input control comprises at least one of the following:
a control used by the user to choose to allow the first electronic device to perform screen recording on the target display content;
a control used by the user to choose to not allow the first electronic device to perform screen recording on the target display content;
a control used by the user to select a screen recording range within which the first electronic device is allowed to perform screen recording on the target display content; and
a control used by the user to select a screen recording range within which the first electronic device is not allowed to perform screen recording on the target display content.

10. The screen recording method according to claim 9, wherein the screen recording range comprises a screen recording region range and/or a screen recording time range.

11. The screen recording method according to any one of claims 1 to 10, wherein the method further comprises:
generating, by the second electronic device, first screen recording response prompt information based on the screen recording response, and displaying the first screen recording response prompt information on the display interface of the second electronic device.

12. The screen recording method according to any one of claims 1 to 11, wherein the performing, by the first electronic device, screen recording on the target display content based on the screen recording response comprises:
if the screen recording response is that the first electronic device is not allowed to perform screen recording on the target display content, performing, by the first electronic device, sensitive information anti-leakage processing on the target display content, and performing screen recording, to obtain a screen recording result; or
if the screen recording response is that the first electronic device is allowed to perform screen recording on the target display content, directly performing, by the first electronic device, screen recording on the target display content, to obtain a screen recording result.

13. The screen recording method according to any one of claims 1 to 12, wherein the method further comprises: generating, by the first electronic device, second screen recording response prompt information based on the screen recording response, and displaying the second screen recording response prompt information on a display interface of the first electronic device.

14. The screen recording method according to any one of claims 1 to 13, wherein the target display content comprises video image information that is sent by the second electronic device and that is collected by a camera of the second electronic device, and/or interface sharing information of the second electronic device that is sent by the second electronic device.

15. A screen recording method, wherein the method is applied to a first electronic device, the first electronic device establishes a communication connection to a second electronic device, a screen of the first electronic device displays target display content provided by the second electronic device for the first electronic device, and the method comprises:
receiving, by the first electronic device, a screen recording instruction, wherein the screen recording instruction is used to instruct the first electronic device to record the target display content displayed on the screen of the first electronic device;
sending, by the first electronic device, a screen recording request for performing screen recording on the target display content to the second electronic device based on the screen recording instruction; and
receiving, by the first electronic device, a screen recording response sent by the second electronic device, wherein the screen recording response corresponds to the screen recording request and is generated by the second electronic device based on the target display content; and performing screen recording on the target display content based on the screen recording response.

16. A screen recording method, wherein the method is applied to a second electronic device, the second electronic device establishes a communication connection to a first electronic device, the second electronic device provides target display content for the first electronic device, so that the content is displayed on a screen of the first electronic device, and the method comprises:
receiving, by the second electronic device, a screen recording request sent by the first electronic device, wherein the screen recording request is used by the first electronic device to request to perform screen recording on the target display content displayed on the screen of the first electronic device; and
generating, by the second electronic device based on the target display content, a screen recording response corresponding to the screen recording request, and sending the screen recording response to the first electronic device, so that the first electronic device performs screen recording on the target display content based on the screen recording response.

17. A screen recording system, wherein the system comprises at least a first electronic device and a second electronic device, the first electronic device establishes a communication connection to the second electronic device, and the second electronic device provides target display content for the first electronic device, so that the target display content is displayed on a screen of the first electronic device, wherein
the first electronic device is configured to receive a screen recording instruction, wherein the screen recording instruction is used to instruct the first electronic device to record the target display content displayed on the screen of the first electronic device;
the first electronic device is configured to send a screen recording request for performing screen recording on the target display content to the second electronic device based on the screen recording instruction;
the second electronic device is configured to receive the screen recording request, generate, based on the target display content, a screen recording response corresponding to the screen recording request, and send the screen recording response to the first electronic device; and
the first electronic device is configured to receive the screen recording response, and perform screen recording on the target display content based on the screen recording response.

18. An electronic device, comprising:
a memory, configured to store a computer program, wherein the computer program comprises program instructions; and
a control component, configured to execute the program instructions, so that the electronic device performs the screen recording method according to any one of claims 1 to 14, or the electronic device performs the screen recording method according to claim 15, or the electronic device performs the screen recording method according to claim 16.

19. A computer-readable storage medium, wherein the computer-readable storage medium stores a computer program, the computer program comprises program instructions, and the program instructions are run by a computer, so that the computer performs the screen recording method according to any one of claims 1 to 14, or the computer performs the screen recording method according to claim 15, or the computer performs the screen recording method according to claim 16.
